# EUROPÄISCHE PATENTSCHRIFT

(11) **EP 1 968 781 B1**
(45) Veröffentlichungstag und Bekanntmachung des Hinweises auf die Patenterteilung: **22.04.2009**
(21) Anmeldenummer: 07801761.3
(22) Anmeldetag: 18.08.2007
(51) Int. Cl.: B29C 65/16, B41M 5/26, C08K 3/08, C08J 3/22

(54) **VERWENDUNG VON SPHÄRISCHEN METALLPARTIKELN ALS LASERMARKIERUNGS- ODER LASERSCHWEISSBARKEITSMITTEL SOWIE LASERMARKIERBARER UND/ODER LASERSCHWEISSBARER KUNSTSTOFF**
USE OF SPHERICAL METAL PARTICLES AS LASER-MARKING OR LASER-WELDABILITY AGENTS, AND LASER-MARKABLE AND/OR LASER-WELDABLE PLASTIC
UTILISATION DE PARTICULES METALLIQUES SPHERIQUES COMME MOYENS DE MARQUAGE PAR LASER OU MOYEN DE SOUDABILITE PAR LASER AINSI QUE MATIERES SYNTHETIQUES MARQUABLES PAR LASER ET/OU SOUDABLES PAR LASER

(30) Priorität: 22.12.2006 DE 102006062269
(43) Veröffentlichungstag der Anmeldung: 17.09.2008
(73) Patentinhaber: Eckart GmbH, 90763 Fürth (DE)
(72) Erfinder: GREB, Marco, 90489 Nürnberg (DE); SCHAAL, Martin, 91224 Hohenstadt (DE); SCHUSTER, Thomas, 91207 Lauf (DE); ZIEGLER, Walter, 91235 Velden (DE)
(74) Vertreter: Walcher, Armin
(86) Internationale Anmeldenummer: PCT/EP2007/007321
(87) Internationale Veröffentlichungsnummer: WO 2008/083726

(56) Entgegenhaltungen:
- WO-A-20/05097514
- WO-A-20/07062785
- US-A1- 2002 039 667
- US-B1- 6 238 847

## Beschreibung

Die Erfindung betrifft die Verwendung von sphärischen Metallpartikeln als Additiv für die Lasermarkierung und/oder Laserschweißung von Kunststoffen. Die Erfindung betrifft ferner einen lasermarkierbaren und/oder laserschweißbaren Kunststoff, der ein Lasermarkierungsmittel gemäß der vorliegenden Erfindung enthält.

Die Kennzeichnung von Kunststoffen durch Lasermarkierung wie auch das Schweißen von Kunststoffteilen mittels Laserenergie ist an sich bekannt. Beides wird durch Absorption der Laserenergie im Kunststoffmaterial entweder direkt durch Wechselwirkung mit dem Polymer oder indirekt mit einem dem Kunststoffmaterial zugesetzten lasersensitiven Mittel bewirkt. Das lasersensitive Mittel kann ein organischer Farbstoff oder ein Pigment sein, welches durch Absorption der Laserenergie eine lokale sichtbare Verfärbung des Kunststoffs bewirkt. Es kann auch eine Verbindung sein, die bei Bestrahlung mit Laserlicht von einer unsichtbaren, farblosen in eine sichtbare Form umgewandelt wird. Beim Laserschweißen wird das Kunststoffmaterial durch Absorption der Laserenergie im Fügebereich so stark erwärmt, dass das Material aufschmilzt und beide Teile miteinander verschweißen.

Die Kennzeichnung von Produktionsgütern wird im Zuge der allgemeinen Rationalisierungsmaßnahmen in nahezu allen Industriezweigen zunehmend wichtiger. So müssen etwa Produktionsdaten, Chargennummern, Verfallsdaten, Produktkennungen, Barcodes, Firmenlogos etc. aufgebracht werden. Gegenüber konventionellen Kennzeichnungstechniken wie Drucken, Prägen, Stempeln, Etikettieren ist die Lasermarkierung deutlich schneller, da berührungslos arbeitend, präziser und ohne weiteres auch auf nicht planen Oberflächen aufzubringen. Da die Lasermarkierungen unter der Oberfläche im Material erzeugt werden, sind diese dauerhaft, haltbar und wesentlich sicherer gegenüber Entfernung, Veränderung oder gar Fälschung. Kontakt mit anderen Medien, etwa bei Flüssigkeitsbehältern und Verschlüssen, ist aus diesem Grund - unter der selbstverständlichen Voraussetzung, dass die Kunststoffmatrix beständig ist - ebenfalls unkritisch. Sicherheit und Dauerhaftigkeit von Produktionskennungen sowie Kontaminationsfreiheit sind äußerst wichtig etwa bei Verpackungen von Pharmazeutika, Lebensmitteln und Getränken.

Die Lasermarkierungstechnologie hat sich insbesondere im Zusammenhang mit der Markierung von Kunststoffen als sehr geeignet erwiesen. Um eine effiziente Markierung von Kunststoffen durchführen zu können, ist es erforderlich, eine ausreichende Wechselwirkung zwischen dem zu markierenden Kunststoff und dem Laserlicht zu erzeugen. Dabei ist darauf zum einen zu achten, dass die in den Kunststoff eingebrachte Energie nicht zu hoch ist, weil dadurch der Kunststoffgegenstand bzw. dessen Textur zerstört werden kann. Auf der anderen Seite darf der Laserstrahl nicht ohne signifikante Wechselwirkung durch den Kunststoff hindurchtreten, da in diesem Fall keine Kennzeichnung des Kunststoffs möglich ist.

Um die Wechselwirkung des Laserstrahles mit dem Kunststoff zu erhöhen, werden Kunststoffe verwendet, in die Absorptionsmittel, auch als Absorber bezeichnet, eingearbeitet sind. Diese Absorptionsmittel können bspw. lasermarkierbare Polymere oder aber auch Perlglanzpigmente und Metalleffektpigmente sein.

Im Falle von Perlglanzpigmenten und Metalleffektpigmenten kommt es zu einer Erhitzung dieser Pigmente durch die Einstrahlung von Laserlicht. In der unmittelbaren Umgebung der Perlglanzpigmente und der Metalleffektpigmente erfolgt dann eine thermische Veränderung des Kunststoffs, z.B. eine Carbonisierung oder ein Aufschäumen des Kunststoffs, wodurch eine Markierung oder Kennzeichnung des Kunststoffgegenstandes möglich ist.

Die DE 197 26 136 A1 offenbart die Verwendung von lasermarkierbaren Polymeren in Form von mikrovermahlenen Partikeln mit einer Teilchengröße von 0,1 bis 100 µm. Nachteilig bei diesen lasermarkierbaren Polymeren ist, dass diese während der Verarbeitung des mit den lasermarkierbaren Polymeren dotierten Kunststoffen schmelzen können. Insoweit ist es erforderlich, dass die Schmelzbereiche des eingearbeiteten lasermarkierbaren Polymers und des verwendeten Kunststoffsystems aufeinander abgestimmt werden müssen.

Die DE 198 10 952 A1 offenbart die Verwendung von Perlglanzpigmenten oder Metallglanzpigmenten als Absorptionsmittel in Kunststoffen. Nachteilig bei der Verwendung von Perlglanzpigmenten oder Metallglanzpigmenten bzw. Metalleffektpigmenten ist, dass, um einen zufriedenstellenden Kontrast nach der Lasermarkierung zu erhalten, die Pigmentmenge entweder so hoch konzentriert werden muss, dass es zwangsläufig zu einer Einfärbung mit Perlglanz bzw. einer metallischer Einfärbung des Kunststoffs kommt.

Somit ist es bei Verwendung von Perlglanzpigmenten bzw. Metalleffektpigmenten in nicht zufriedenstellender Weise möglich, eine kontraststarke Lasermarkierung ohne merkbare Farbgebung im Falle von Perlglanzpigmenten (Perlglanzeffekt) bzw. ohne merkbare metallische Einfärbung im Falle von Metallglanz- bzw. Metalleffektpigmenten zu erreichen. Außerdem sind Metalleffektpigmente und Perlglanzpigmente relativ teuer.

Weiterhin führt die plättchenartige Struktur der Perlglanzpigmente bzw. der Metallglanz- oder Metalleffektpigmente nachteiligerweise dazu, dass sich die Pigmente in der während des Spritzgießens der Kunststoffmasse prozessbedingt auftretenden laminaren Strömung aufgrund ihrer plättchenartigen Struktur ausrichten, was zu Fließlinien oder Schlieren in dem hergestellten Kunststoffgegenstand führt.

Um einen gewünschten Kontrast bei der Lasermarkierung von Kunststoffen zu erhalten, wird gemäß der Lehre der EP 1 145 864 A1 ein Gemisch aus Metall- bzw. Halbmetallpulver und eines Effektpigmentes oder mehrerer Effektpigmente auf Basis von Schichtsilikaten verwendet. Auch hier erfolgt eine für klare und transparente Kunststoffe unerwünschte sichtbare Einfärbung bzw. metallische Einfärbung des Kunststoffs. Weiterhin werden durch die Perlglanzpigmente nachteiligerweise ebenfalls Schlieren bzw. Fließlinien in dem hergestellten Kunststoffgegenstand erzeugt.

In der DE 10 2004 053 376 A1 werden farbige Lasermarkierungen und Laserbeschriftungen von Kunststoffen, die auf einer Verschweißung eines polymerhaltigen Beschriftungsmediums mit der Kunststoffoberfläche beruhen, offenbart. In dieser Schrift werden u.a. auch kugelförmige Metallpulver als zur Markierung geeignete Energieabsorber erwähnt. Allerdings werden keine Angaben hinsichtlich der Größe der Metallpulver gemacht.

Gemäß der Lehre der DE 10 2004 045 305 A1 kann das im Stand der Technik bestehende Problem, dass die Absorber die zu beschriftenden Kunststoffe nachhaltig einfärben, dadurch behoben werden, dass in das Kunststoffmaterial eine Boridverbindung, vorzugsweise Lanthanhexaborid eingearbeitet wird. Nachteilig ist, dass diese Boridverbindungen, insbesondere Lanthanhexaborid, einen signifikanten Kostenfaktor darstellen, insofern eignen sich diese Boridverbindungen nicht als ein in großem Umfang verwendbare Lasermarkierungsmittel.

Um eine Markierung von transparenten Kunststoffmaterialien ohne Einfärbung zu ermöglichen, wird gemäß der Lehre der US 6,693,657 B2 sowie der WO 2005/047009 ein Lasermarkierungsmittel verwendet, das ein Gemisch von Antimonoxid und Zinnoxid umfaßt. In der WO 2005/084956 sind hochtransparente Kunststoffmaterialien beschrieben, die mittels nanoskaliger Indium-Zinnoxid- oder Antimon-Zinnoxidteilchen lasermarkierbar und/oder laserschweißbar sind. Nachteilig ist, dass Antimonoxid wie jede andere Antimonverbindung hochgiftig ist. Insofern stellt dieses Lasermarkierungsmittel zum einen bei der Herstellung und Verarbeitung als auch bei der Entsorgung ein erhebliches Risiko für Umwelt und Mensch dar, da zunächst Antimon bzw. Antimon-haltige Verbindungen verwendet und schließlich die Kunststoffartikel, die Antimon und/oder Antimon-haltige Verbindungen aufweisen, wieder entsorgt werden müssen.

In der WO 2002/055287 A1 wird ein Verfahren zur Herstellung laserverschweißter Verbundformteile beschrieben. Hier werden Metallflocken und Metallpulver als Füllstoffe erwähnt. Diese werden allerdings in relativ hohen Konzentrationen vor 1 bis 60 Gew-%, bezogen auf das Kunststoffformteil, eingesetzt.

Aufgabe der vorliegenden Erfindung ist es, ein Lasermarkierungsmittel bereitzustellen, das eine Markierung von transparenten Kunststoffmaterialien mit gutem Kontrast bei schlierenfreier Einarbeitung ermöglicht. Vorzugsweise soll ein guter Kontrast erhalten werden, ohne dabei die Kunststoffmaterialien zwangsläufig einfärben zu müssen.

Eine weitere Aufgabe der Erfindung ist es, ein toxikologisch unbedenkliches Lasermarkierungsmittel bereitzustellen, das preisgünstig und in großen Mengen zur Verfügung steht.

Eine weitere Aufgabe ist es, einen lasermarkierbaren und/oder laserschweißbaren Kunststoff mit einem Lasermarkierungsmittel bereitzustellen, welcher praktisch keine Eintrübungen oder Einfärbungen durch das Lasermarkierungsmittel aufweist.

Die der Erfindung zugrundeliegende Aufgabe wird gelöst durch Verwendung von sphärischen Metallpartikeln, die frei von Antimon und/oder Antimon-haltigen Verbindungen sind, als Lasermarkierungsmittel in einem Kunststoff, wobei die mittels Lasergranulometrie bestimmte Korngrößenverteilung der sphärischen Metallpartikel, in der Form der Volumen-gemittelten Summendurchgangskorngrößenverteilung, einen D₉₉-Wert von < 110 µm, einen D₉₀-Wert von < 75 µm und einen D₅₀-Wert von < 45 µm, aufweisen.
Bevorzugte Ausführungsformen sind in den abhängigen Ansprüchen angegeben.

Die Lasergranulometrie ist ein Laserbeugungsverfahren, bei dem die Größe der Partikel aus der Beugung des Laserlichts ermittelt wird. Vorzugsweise wird das Laserbeugungsverfahren mit dem Gerät Helos der Fa. Sympatec, Clausthal-Zellerfeld, Deutschland, gemäß Herstellerangaben durchgeführt.

Die Aufgabe wird ferner gelöst durch Bereitstellung eines Kunststoffs, welcher als ein Lasermarkierungsmittel sphärische Metallpartikel, die frei von Antimon und/oder Antimon-haltigen Verbindungen sind, enthält.
Bevorzugte Ausführungsformen sind in den abhängigen Ansprüchen angegeben.

Metallpulver sind seit langem bekannt. Sie werden u.a. als Ausgangsmaterial zur Herstellung von Metallplättchen verwendet. So wird Zinkpulver beispielsweise als Korrosionspigment eingesetzt.

Es hat sich völlig überraschend herausgestellt, dass sich Metallpulver, die in dieser Anmeldung als sphärische Metallpartikel bezeichnet werden, ausgezeichnet als Lasermarkierungsmittel eignen. Dabei ist erstaunlich, dass bei Verwendung von Metallpulver keine Fließlinien und/oder Schlieren in dem Kunststoffmaterial erzeugt bzw. sichtbar gemacht werden.

Völlig überraschend ist dabei, dass sphärische Metallpartikel eine kontrastreiche Kennzeichnung ermöglichen, ohne dass dabei notwendigerweise transparente Kunststoffmaterialien eingetrübt oder eingefärbt werden müssen. Der Grund hierfür dürfte vermutlich darin liegen, dass aufgrund der sphärischen Form der Metallpartikel einfallendes Licht im Unterschied zu den flächigen Perlglanzpigmenten oder flächigen Metalleffektpigmenten nicht gerichtet reflektiert wird und insofern von einem Betrachter nicht als stark reflektierendes Pigment wahrgenommen wird. Auf der anderen Seite vermögen sphärische Metallpartikel das eingestrahlte Laserlicht in hohem Maße zu absorbieren und demzufolge in Wärme umzuwandeln.

Unter sphärischen Metallpartikeln wird im Sinne der Erfindung nicht notwendigerweise eine absolut konzentrische dreidimensionale Struktur verstanden.

Unter sphärischen Metallpartikeln wird im Sinne der Erfindung verstanden, dass diese keine plättchenartige Form aufweisen, wie dies bei Effektpigmenten, bspw. Perlglanzpigmenten oder Metalleffektpigmenten, der Fall ist. Unter dem Begriff sphärische Form wird im Sinne der Erfindung beispielsweise auch eine Form verstanden, die nur eine angenähert kugelförmige Form, eine ellipsoide Form aufweist oder spratzig ist. Eine spratzige Form ist insbesondere dadurch gekennzeichnet, dass auf einem nicht-flächigen Körper an der Oberfläche bspw. dendritische Fortsätze vorhanden sein können. Zudem kann die Oberfläche auch irregulär geformt sein kann. Derartige sphärische Metallpartikel können bspw. durch Verdüsung oder Zerstäubung von geschmolzenem Metall erhalten werden. Sie werden kommerziell in großen Mengen hergestellt und sind preisgünstig erhältlich, beispielsweise von der Fa. Ecka Granules (D-91235 Velden, Deutschland).

Prinzipiell können zur Lasermarkierung sphärische Metallpartikel mit einem weiten Korngrößenbereich verwendet werden. Bevorzugt werden jedoch kleinere Metallpartikel verwendet. Es hat sich überraschenderweise herausgestellt, dass die Abbildungsschärfe und insbesondere die Punktgenauigkeit der Lasermarkierung bei Verwendung kleinerer Metallpartikel besser werden. Die Punktgenauigkeit verschlechtert sich, wenn auch nur kleine Mengen zu großer Metallpartikel vorhanden sind.
Sphärische Metallpartikel besitzen eine Korngrößenverteilung, die gewöhnlicherweise ungefähr die Form einer log-Normalverteilung aufweist. Die Größenverteilung wird üblicherweise mittels Lasergrahulometrie bestimmt.

Bei dieser Methode können die Metallpartikel in Form eines Pulvers vermessen werden. Die Streuung des eingestrahlten Laserlichtes wird in verschiedene Raumrichtungen erfasst und gemäß der Fraunhofer Beugungstheorie mittels der in Verbindung mit dem Helos-Gerät der Firma Sympatec, Deutschland, verwendeten Software Windox, Vers. 5, Release 5.1 gemäß Herstellerangaben ausgewertet. Dabei werden die Partikel rechnerisch als Kugeln behandelt. Somit beziehen sich die ermittelten Durchmesser stets auf den über alle Raumrichtungen gemittelte Äquivalentkugeldurchmesser, unabhängig von der tatsächlichen Form der Metallpartikel. Es wird die Größenverteilung ermittelt, die in Form eines Volumenmittels (bezogen auf den Äquivalentkugeldurchmesser) berechnet wird. Diese volumengemittelte Größenverteilung kann u.a. als Summendurchgangskurve dargestellt werden. Die Summendurchgangskurve wiederum wird meist vereinfachend durch bestimmte Kennwerte charakterisiert, z. B. den D₅₀- oder D₉₀-Wert. Unter einem D₉₀-Wert wird verstanden, dass 90 % aller Partikel unter dem angegebenen Wert liegen. Anders ausgedrückt, liegen 10 % aller Partikel oberhalb des angegebenen Wertes. Bei einem D₅₀-Wert liegen 50 % aller Partikel unter und 50 % aller Partikel oberhalb des angegebenen Wertes.

Die erfindungsgemäßen sphärischen Metallpartikel weisen eine Korngrößenverteilung mit einem D₉₉-Wert < 110 µm, einem D₉₀-Wert von < 75 µm und einem D₅₀-Wert < 45 µm auf. Besonders bevorzugt weisen die erfindungsgemäßen sphärischen Metallpartikel einen D₅₀-Wert im Bereich von 0,5 bis < 45 µm auf.

Bei zu groben sphärischen Metallpartikel mit einer Korngrößenverteilung mit D₉₉-Wert > 110 µm und einem D₉₀-Wert von > 75 µm sind der gewünschte Kontrast und insbesondere die hohe Punktgenauigkeit der Lasermarkierung nicht zufriedenstellend. Gleiches gilt, wenn beispielsweise die Korngrößenverteilung der sphärischen Metallpartikel einen D₉₉-Wert < 110 µm und einem D₉₀-Wert von < 75 µm aufweisen, jedoch der D₅₀-Wert > 45 µm ist. Derartige Metallpartikel besitzen einengeringeren Feinanteil und weisen nicht die in dieser Erfindung beschriebenen Vorteile auf.

Vorzugsweise ist der D₉₉-Wert < 70 µm und der D₉₀-Wert von < 40 µm. Hiermit sind vorzugsweise Korngrößenverteilungen mit einem D₅₀-Wert von < 25 µm verbunden. Besonders bevorzugt weisen die erfindungsgemäßen sphärischen Metallpartikel einen D₅₀-Wert im Bereich von 0,5 bis < 25 µm auf. Bei Verwendung dieser feineren Metallpartikeln ist die Punktgenauigkeit der Lasermarkierung weiter verbessert.

Unter Punktgenauigkeit versteht man eine gute Auflösung der Lasermarkierung ohne störende vereinzelte besonders große Punkte. Derart störende Punkte treten insbesondere bei Verwendung von groben Metallpartikeln auf.

Die sphärischen Metallpartikel werden dem Kunststoff zugesetzt und durch Extrusion verarbeitet. Hierbei kann es passieren, das vereinzelte Partikel durch die im Extruder auftretenden Scherkräfte zu Plättchen (Flakes oder Flitter) verformt werden. Dies macht sich im Kunststoff durch helle, metallisch glänzende Punkte bzw. Flitter bemerkbar. Wenn dieser Effekt nicht auftreten soll, so sind in einer weiter bevorzugten Ausführungsform sphärische Metallpartikel mit einer Korngrößenverteilung mit einem D₉₉-Wert < 65 µm und einem D₉₀-Wert von < 36 µm zu verwenden. Hierbei ist vorzugsweise der D₅₀-Wert der Korngrößenverteilung < 20 µm. Besonders bevorzugt weisen die erfindungsgemäßen sphärischen Metallpartikel einen D₅₀-Wert im Bereich von 0,55 bis < 20 µm auf.

Besonders bevorzugt werden sphärische Metallpartikel mit einer Korngrößenverteilung mit einem D₉₉-Wert < 55 µm und einem D₉₀-Wert von < 30 µm verwendet. Bei diesen sphärische Metallpartikel ist vorzugsweise der D₅₀-Wert der Korngrößenverteilung <18 µm. Besonders bevorzugt weisen die erfindungsgemäßen sphärischen Metallpartikel einen D₅₀-Wert im Bereich von 0,6 bis < 18 µm auf. Mit steigender Feinheit, d.h. mit abnehmender Korngröße der sphärischen Metallpartikel, kann die Abbildungsschärfe und die Punktgenauigkeit der durch Lasermarkierung aufgebrachten Kennzeichnung oder Abbildung nochmals weiter gesteigert werden.

Besonders feine Typen bewirken eine ausgeprägt hohe Abbildungsschärfe, Punktgenauigkeit und Kontrast bei der Lasermarkierung.
Es wird vermutet, dass durch die Verwendung feiner Metallpartikel aufgrund deren hoher spezifischen Oberfläche die Laserlichtabsorption und nachfolgend die Energieabgabe in die Umgebung des Metallpartikels in besonders definierter, örtlich eng begrenzter Weise erfolgt. Daher weisen die Lasermarkierungen entsprechend pigmentierter Kunststoffe die genannten Vorteile auf.

In einer ganz besonders bevorzugten Ausführungsform werden erfindungsgemäße Metallpartikel mit einer Korngrößenverteilung mit einem D₉₉-Wert < 40 µm und einem D₉₀-Wert von < 20 µm verwendet. Bei diesen sphärischen Metallpartikeln ist vorzugsweise der D₅₀-Wert der Korngrößenverteilung < 11 µm. Besonders bevorzugt weisen die erfindungsgemäßen sphärischen Metallpartikel einen D₅₀-Wert im Bereich von 0,65 bis < 11 µm auf.
Bei diesen sehr feinen Metallpartikeln wurde überraschenderweise gefunden, dass Lasermarkierungen mit hohem Kontrast und Punktgenauigkeit bei sehr hohen Schreibgeschwindigkeiten des Lasers erhalten werden können. Die Schreibgeschwindigkeiten des Lasers reichen von 120 bis ca. 10.000 mm/s, bevorzugt von 150 bis 8.000 mm/s, besonders bevorzugt von 200 bis 2.000 mm/s und ganz besonders bevorzugt von 230 bis 1.000 mm/s. Hierbei ist die im einzelnen erreichbare Schreibgeschwindigkeit abhängig von vielen Parametern, insbesondere jedoch von der Laserleistung und der Impulsfrequenz. Dies bringt im Hinblick auf die Durchsatzraten bei der Lasermarkierung von Objekten erhebliche Zeitvorteile mit sich.

Gemäß einer weiteren bevorzugten Ausführungsform der Erfindung weisen die erfindungsgemäßen Metallpartikel einen Metalloxidgehalt von nicht mehr als 15 Gew.-%, bezogen auf das Gesamtgewicht der Metallpartikel auf. Weiterhin ist bevorzugt, dass der Metalloxidgehalt der Metallpartikel nicht mehr als 10 Gew.-%, und weiter bevorzugt nicht mehr als 5 Gew.-% beträgt. Als sehr geeignet hat sich ein Metalloxidgehalt von etwa 0,3 bis 6 Gew.% und besonders bevorzugt von 0,4 bis 1,5 Gew.-% erwiesen.

Die geringen Metalloxidgehalte wirken sich vorteilhaft auf die schnelle Energieaufnahme des eingestrahlten Laserstrahlung durch die Metallpartikel auf. Die Untergrenze von 0,3 Gew.-% Metalloxidgehalt ist durch die sich natürlich ausbildende Oxidschicht der Metalle bedingt.

Bei dem Metalloxidgehalt der Metallpartikel kann es sich zum einen um eine oberflächlich gebildete Metalloxidschicht handeln. Beispielsweise weisen Aluminiumpartikel an der Oberfläche eine dünne Aluminiumoxidschicht auf.

Die Metallpartikel bestehen mithin vorzugsweise zu etwa 80 Gew.-%, weiter bevorzugt zu etwa 85 Gew.-%, weiterhin bevorzugt zu etwa 90 Gew.-%, noch weitere bevorzugt zu etwa 95 Gew.-% aus Metall. Vorzugsweise bestehen die Metallpartikel zu 98,5 bis 99,6 Gew.-% aus Metall.

Vorzugsweise enthalten die Metallpartikel Metalle oder bestehen aus Metallen, die aus der Gruppe, die aus Aluminium, Kupfer, Silber, Gold, Zink, Zinn, Eisen, Titan, Vanadium, Magnesium und Legierungen davon besteht, ausgewählt wird. Eine Legierung muss nicht notwendigerweise ausschließlich aus den vorgenannten Metallen bestehen. Es können auch weitere Metalle in Legierung mit den vorgenannten Metallen oder Legierungen davon vorliegen, beispielsweise auch in Form von Verunreinigungen. Als sehr geeignete Metalle haben sich Aluminium, Silber, Kupfer und Eisen erwiesen. Diese Metalle haben ergeben auch in kleinsten Konzentrationen besonders gute Lasermarkierbarkeiten. Eine geeignete Legierung ist beispielsweise Messing.

Aufgrund der mikroskaligen Korngrößenverteilung der Metallpartikel weist das erfindungsgemäße Lasermarkierungsmittel eine äußerst hohe Punktgenauigkeit auf.

Nach Einstrahlung eines Laserstrahls in einen Kunststoff, der das erfindungsgemäße Lasermarkierungsmittel enthält, kommt es nach Einstrahlung eines Laserstrahls zu einer selektiven Erhitzung der mikroskaligen Metallpartikel, Übertragung der Wärme auf den umgebenen Kunststoff und infolge des hiermit verbundenen thermisch induzierten Polymerabbaus zu einer Carbonisierung und/oder zu einem Aufschäumen der die Metallpartikel umgebenden Polymere in der Kunststoffmatrix. In Abhängigkeit von der Art des verwendeten Polymers und/oder in Abhängigkeit von dem Energieeintrag durch den Laserstrahl kommt es zu einer Carbonisierung und/oder zu einem Aufschäumen.

Eine Carbonsierung führt zu einer Schwarzeinfärbung; ein Aufschäumen führt zu einer Aufhellung, die bis zu einer Art Weißeinfärbung reichen kann. In den meisten Fällen ist ein deutlicher Kontrast zum nichtmarkierten Kunststoff erwünscht.

In weiteren Ausführungsformen jedoch kann die durch den thermisch induzierten Polymerabbau hervorgerufen Änderung im Kunststoff so gering sein, dass sie nicht oder nur unwesentlich mit dem menschlichen Auge wahrgenommen werden können. Derartige Markierungen können jedoch durch spezielle Lesegräte detektiert werden. Daher können derartige im wesentlichen unsichtbare Lasermarkierungen z.B. für Sicherheitsmarkierungen oder auf CD's Verwendung finden.

Weitere Ausführungsformen sehen eine gezielte Verfärbung des Kunststoffes durch Beimischung eines mit dem eingestrahlten Laserlicht gezielt abbaubaren Farbmittels vor. So kann dieses Farbmittel sich unter Einwirkung des Laserlichtes zersetzen und der Kunststoff zusätzlich zur Schwarzfärbung oder Aufhellung farbloser oder, wenn dem Kunststoff weitere nicht durch das Laserlicht abbaubare Farbmittel zugesetzt sind, deren Eigenfarbe annehmen.

Da die Carbonisierung und/oder das Aufschäumen nur lokal um die mikroskaligen Metallpartikel herum erfolgt, kann eine Markierung mit hoher Punktgenauigkeit erfolgen. Eine hohe Abbildungsschärfe macht sich unter anderem dadurch bemerkbar, dass ein Strich nicht als Ansammlung von einzelnen Punkten wahrgenommen wird, sondern als durchgehender gerader Strich, der aus einer Vielzahl kleiner, für das menschliche Auge nicht auflösbarer Punkte zusammengesetzt ist.

Es hat sich mithin als äußerst überraschend herausgestellt, dass - obwohl die Wechselwirkung der sphärischen Metallpartikel mit sichtbarem Licht nicht stark genug ist, um zu einer Vergrauung (Trübung) eines Kunststoffmaterials zu führen - die Wechselwirkung mit eingestrahltem Laserlicht jedoch ausreichend ist, um die gewünschte Carbonisierung und/oder das gewünschte Aufschäumen der die Metallpartikel umgebenden Polymermatrix zu erzeugen und mithin den Kunststoffgegenstand, mit einer kontrastreichen Kennzeichnung oder Markierung zu versehen.

Die mikroskaligen sphärischen Metallpartikel sind aufgrund ihrer sehr hohen Absorptionseigenschaften für elektromagnetische Strahlung vom UV- bis hin zum IR-Bereich sowie ihrer ausgezeichneten Wärmeleitfähigkeit besonders gut als Lasermarkierungs- und/oder laserschweißbarkeitsmittel geeignet. Sie übertreffen herkömmliche metalloxidische Partikel in ihrer diesbezüglichen Wirksamkeit.

Die sphärischen Metallpartikel können in Form eines Pulvers dem Kunststoff zugegeben werden. Vorteilhafter ist jedoch die Zugabe der sphärischen Metallpartikel in Form eines Konzentrates oder Masterbatches. Es hat sich gezeigt, dass Konzentrate oder Masterbatche die Einarbeitbarkeit der sphärischen Metallpartikel in Kunststoffe erheblich erleichtert.

Ein Masterbatch im Sinne der vorliegenden Erfindung umfasst sphärische Metallpartikel und mindestens einen Dispersionsträger.

Im Masterbatch beträgt der Gehalt an sphärischen Metallpartikeln 0,001 bis 99,9 Gew.-%, bezogen auf das Gesamtgewicht des Masterbatches. Bevorzugt beträgt der Gehalt an sphärischen Metallpartikeln 0,5 bis 95,0 Gew.%, besonders bevorzugt 1,0 bis 95 Gew.-% und weiter besonders bevorzugt bei 5 bis 80 Gew.-%, jeweils bezogen auf das Gesamtgewicht des Masterbatches.

Der Dispersionsträger kann mindestens eine Kunststoffkomponente, Wachse, Harze, Additive, Lösemittel und/oder Weichmacher umfassen.

Im Fall eines bei Raumtemperatur (18-25 °C) festen Masterbatches umfasst der Dispersionsträger bevorzugt Kunststoffkomponenten, Wachse, Harze und/oder Additive.

Als Kunststoffkomponente wird dabei vorzugsweise ein Polymer verwendet, das mit dem Kunststoffmaterial, in das es eingearbeitet werden soll, verträglich ist. Gemäß einer bevorzugten Variante ist die in dem erfindungsgemäßen Masterbatch verwendete Kunststoffkomponente identisch mit dem Kunststoffmaterial, in das Lasermarkierungsmittel eingearbeitet werden soll.

Als Wachse sind bevorzugt Polyolefin-Abbauwachse oder Polyalkylenwachse, beispielsweise Polypropylenwachse. Als Polypropylenwachs hat sich Licocene^{®}, Fa. Clariant, Schweiz, als sehr geeignet erwiesen.

Bevorzugte Harze, die im erfindungsgemäßen Masterbatch verwendet werden können, sind Phenolharze, oder Ketonharze wie z.B. Laropal A81 der Fa. BASF.

Als Additive können dem Lasermarkierungsmittel Stabilisatoren, Tenside, Entschäumer, Dispergiermittel, Korrosionsinhibitoren, beispielsweise organische Phosphorsäuren oder Phosphonsäuren, und/oder oberflächenaktive Substanzen, etc. zugesetzt werden.

Die Additive können beispielsweise zu einer Verbesserung der Einarbeitbarkeit Masterbatches in den Kunststoff führen. Durch die Additive wird eine Agglomeration oder Sedimentation der Metallpartikel im Masterbatch verhindert. Die Additive können mit dem sphärischen Metallpartikeln einfach zusammen gemischt werden bzw. die sphärischen Metallpartikeln mit den Additiven beschichtet werden.

Gemäß einer weiteren bevorzugten Weiterbildung der Erfindung enthält der Masterbatch einen Gehalt an Additive der vorzugsweise in einem Bereich von 0,001 bis 20 Gew.-%, bezogen auf das Gesamtgewicht des Masterbatches, beträgt. Gemäß einer weiteren bevorzugten Ausführungsform beträgt der Gehalt an Additiven 0,01 bis 10 Gew.-%, weiter bevorzugt 0,1 bis 4 Gew.-%, jeweils bezogen auf das Gesamtgewicht des Masterbatches.

Im Fall eines bei Raumtemperatur (18-25 °C) flüssigen Masterbatches umfasst der Dispersionsträger bevorzugt Lösemittel und/oder Weichmacher. Als Lösemittel wird besonders bevorzugt Weißöl verwendet. Als Weichmacher werden üblicherweise Phthalate, Adipate, Trimellitate, Sebazate, Weinsäurederivate, Zitronensäureester, Polyester, Phosphate oder Fettsäureester verwendet.
Bevorzugte Beispiele hierfür sind Bis-2-ethyloctyl-phthalat, Bis-2-ethylhexyl-adipat, Tri-2-ethylhexyl-trimellitat oder Epoxidiertes Sojaöl.

Der Masterbatch kann weitere Komponenten wie beispielsweise Farbpigmente und/oder Farbstoffe enthalten.

Hinsichtlich der Konzentration an sphärischen Metallpartikeln im Masterbatch sind zwei bevorzugte unterschiedliche Bereiche zu unterscheiden:
In einem Fall beträgt der Gehalt an sphärischen Metallpartikeln im Masterbatch bevorzugt 80 bis 99 Gew.-% und besonders bevorzugt 85 bis 95 Gew.-%, jeweils bezogen auf das Gesamtgewicht des Masterbatches. In diesem Fall werden dem Masterbatch bevorzugt polymerverträgliche Lösemittel wie Weißöl und/oder Kunststoffkomponenten sowie Dispergiermittel zugegeben.

Der Gehalt der Kunststoffkomponente im Masterbatch liegt in diesem Fall vorzugsweise in einem Bereich von 0,5 bis 20 Gew.-%, bevorzugt 1 bis 15 Gew.-% und besonders bevorzugt von 2 bis 10 Gew.-%, jeweils bezogen auf das Gesamtgewicht des Masterbatches.

Im anderen Fall ähnelt der Masterbatch in seiner Zusammensetzung bereits sehr stark dem lasermarkierbaren Kunststoff, nur liegen die Komponenten in konzentrierterer Form vor.

Der Gehalt an sphärischen Metallpartikeln im Masterbatch liegt hier bevorzugt bei 0,001 bis 5 Gew.-% und besonders bevorzugt 0,5 bis 2 Gew.-%, jeweils bezogen auf das Gesamtgewicht des Masterbatches.

Das Masterbatch enthält hier überwiegend Kunststoffkomponenten.
Der Gehalt der Kunststoffkomponente im Masterbatch liegt in diesem Fall vorzugsweise in einem Bereich von 50 bis 99 Gew.-%, bevorzugt 60 bis 98 Gew.-% und besonders bevorzugt von 70 bis 95 Gew.-%, jeweils bezogen auf das Gesamtgewicht des Masterbatches.
In diesem Fall wird das Masterbatch bevorzugt dem Kunststoff entweder vor dem Extrudieren beigemischt, oder während des Extrudierprozesses zudosiert. Weiterhin enthält ein derartiger Masterbatch i.d.R. Additive und optional Wachse, Farbpigmente und/oder Farbstoffe.

Die Herstellung des Masterbatches erfolgt z.B. in einem geeigneten Mischer, beispielsweise einem Taumelmischer. Hierbei werden die sphärischen Metallpulver sowie ggfs. weitere Komponenten mit einem Kunststoffgranulat oder Kunststoffpulver bzw. Kunststoffausgangsmaterial in jeglicher Darreichungsform vermengt und nachfolgend beispielsweise extrudiert werden. Auch kann das Masterbatch hergestellt werden, indem die sphärischen Metallpulver sowie ggfs.weitere Komponenten direkt der Kunststoffschmelze beim Extrudierprozess zudosiert werden.

Da das erfindungsgemäße Lasermarkierungsmittel im wesentlichen aus sphärischen Metallpartikeln besteht, kann die Vermischung auch unter intensiven Bedingungen erfolgen. Eine Verformung der Metallpartikel zu Plättchen, wie sie im Fall einer Verwendung von Metalleffektpigmenten vorliegen, ist lediglich bei gröberen Partikeln zu beobachten. Die erhaltene Mischung kann dann direkt, beispielsweise in einem Extruder oder einer Spritzgießmaschine, weiter verarbeitet werden. Nach Erhalt des gewünschten Kunststoff-Formkörpers kann die Kennzeichnung mittels Laserstrahl durchgeführt werden.

Aufgrund der mikroskaligen Größe der Metallpartikel ist es sowohl aus Handhabungsgründen als auch aus Gesundheits- und Sicherheitsgründen bevorzugt, dass das erfindungsgemäße Lasermarkierungsmittel oder ein Masterbatch davon in staubarmer, vorzugsweise-nicht-staubender Präparation vorliegt.

Insofern liegt bei einer weiter bevorzugten Form das Masterbatch, enthaltend mindestens das Lasermarkierungsmittel und die Kunststoffkomponente, in einer kompaktierten Form vor. Diese kompaktierte Form umfaßt Granulate, Tabletten, Briketts, Würstchen oder Pellets. Der Lösemittelgehalt derartiger kompaktierter Formen liegt bei 0,0 bis 15 Gew-% und bevorzugt bei 0,001 bis 5 Gew.-% und ebenfalls bevorzugt bei 0,0 bis < 0,1 Gew-% (in Lebensmittelverpackungen), jeweils bezogen auf das Gesamtgewicht der kompaktierten Form. Die Größe der kompaktierten Formen liegt dabei in einem Bereich von 50 µm bis 80 mm, vorzugsweise 200 µm bis 50 mm, weiter bevorzugten von 500 µm bis 25 mm. Eine sehr geeignete Größe der kompaktierten Formen des erfindungsgemäßen Lasermarkierungsmittels oder des Masterbatches liegt in einem Bereich von 750 µm bis 10 mm.

Die Kompaktierung kann dabei durch Vermengen von sphärischen Metallpartikeln und Kunststoffkomponenten und optional einem weiteren Bindemittel und nachfolgendes Granulieren, Pelletieren, Tablettieren, Extrudieren, Komprimieren, etc. erfolgen. Hierbei wird durch entsprechende Temperaturen die Kunststoffkomponente aufgeschmolzen und vereinigt sich somit mit den sphärischen Metallpigmenten unter Beibehaltung der aufgezwungenen Form.
In einer weiteren Ausführungsform wird das Bindemittel in einem geeigneten Lösemittel gelöst und mit dem Lasermarkierungsmittel und ggfs. anderen Additiven gemischt. Anschließend wird in einer Ausführungsform unter Rühren das Lösemittel durch Vakuum und/oder erhöhter Temperatur wieder entfernt. Dadurch entstehen dreidimensionale unregelmäßige geformte Granulate. In einer weiteren Ausführungsform wird die Paste pelletiert oder tablettiet und anschließend ausgetrocknet.

Die vorgenannten Darreichungsformen ermöglichen eine sichere Handhabung und Einarbeitung in einen Kunststoff, ohne Gefahr einer Metallstaubexplosion oder gesundheitlicher Beeinträchtigung.

Äußerst vorteilhaft bei der vorliegenden Erfindung ist, dass eine etwaige Trübung oder Graufärbung des Kunststoffs durch Zusatz von Farbmitteln ohne weiteres überdeckt werden kann. Im Stand der Technik sind die zuweilen auftretenden braunen oder grünlichen Einfärbungen kaum zu überdecken, da sie - im Unterschied zu einer leichten Trübung oder Vergrauung - eine Einfärbung darstellen.

Gemäß einer weiteren bevorzugten Ausführungsform der Erfindung sind die Metallpartikel mit wenigstens einer anorganischen Metalloxidschicht versehen.

Die wenigstens eine anorganische Metalloxidschicht kann separat auf die Metallpartikel aufgebracht sein. Bspw. kann als Metalloxidschicht eine SiO₂-Schicht, Al₂O₃ -Schicht oder TiO₂ -Schicht aufgebracht sein. Es können auch Kombinationen von Metalloxidschichten, beispielsweise von zunächst SiO₂ und darauffolgend TiO₂ oder von zunächst TiO₂ und darauffolgend SiO₂ aufgebracht sein.

Vorzugsweise wird als Metalloxidschicht eine SiO₂-Schich aufgebracht. Die SiO₂-Schicht wird bevorzugt unter Verwendung von Sol-Gel-Verfahren aufgebracht.

Als Ausgangsverbindungen für die SiO₂-Schich werden bevorzugt Tetraalkoxysilane verwendet. Beispiele hierfür sind: Tetramethoxysilan, Tetraethoxysilan, Tetrapropoxysilan, Tetraisopropoxysilan oder Tetrabutoxysilan oder Mischungen hieraus.

Das Tetraalkoxysilan wird unter Wasserzugabe in vorzugsweise basischem Milieu zunächst hydrolysiert und nachfolgend eine SiO₂ -Schicht auf die Metallpartikel abgeschieden wird.

Zur Katalyse der SiO₂ Abscheidung werden vorzugsweise stickstoffhaltige Basen wie Ammoniak, Alkyl- oder Dialkylamine hinzugefügt. Geeignete Verbindungen sind Methylamin, Ethylamin, Dimethylamin, Diethylamin, Pyridin, Piperazin, etc.

Auf die Metallpartikel kann gemäß einer weiteren bevorzugten Ausführungsform auch eine organisch-chemische Oberflächenmodifizierung aufgebracht sein.

Zwischen Metallpartikel und organisch-chemischer Oberflächenmodifizierung kann ferner eine Metalloxidschicht, beispielsweise SiO₂-Schicht angeordnet sein.

Die organisch-chemische Oberflächenmodifizierung kann in einer weiteren Variante eine die Metallpartikel umhüllende organisch-chemische Polymermatrix sein. Diese wird bevorzugt durch gezielte Polymerisation aus Monomeren aus die Metallpartikel aufgebracht.

Die der Erfindung zugrundeliegende Aufgabe wird ferner durch einen lasermarkierbaren und/oder laserschweißbaren Kunststoff gelöst, der ein Lasermarkierungsmittel enthält, wie insbesondere in den Ansprüchen 1 bis 8 beansprucht.. Ferner kann der lasermarkierbare und/oder laserschweißbare Kunststoff einen erfindungsgemäßen Masterbatch gemäß einem der Ansprüche 9 bis 12 enthalten.

Der lasermarkierbare und/oder laserschweißbare Kunststoff umfaßt vorzugsweise thermoplastische, duroplastische oder elastomere Kunststoffe. Besonders bevorzugt sind hierbei thermoplastische Kunststoffe.

Als thermoplastische Polymere kommen alle dem Fachmann bekannten Thermoplaste in Betracht. Geeignete thermoplastische Polymere werden beispielsweise im Kunststoff-Taschenbuch, Hrsg. Saechtling, 25. Ausgabe, Hanser-Verlag, München, 1992, insbesondere Kapitel 4 sowie darin zitierte Verweise, und im Kunststoff-Handbuch, Hrsg. G. Becker und D. Braun, Bände 1 bis 11, Hanser-Verlag, München, 1966 bis 1996, beschrieben.

Exemplarisch seien als geeignete Thermoplaste genannt Polyoxyalkylene, Polycarbonate (PC), Polyester wie Polybutylenterephthalat (PBT) oder Polyethylenterephthalat (PET), Polyolefine wie Polyethylen oder Polypropylen (PP), Poly(meth)acrylate, Polyamide, vinylaromatische (Co)polymere wie Polystyrol, schlagzähmodifiziertes Polystyrol wie HI-PS, oder ASA-, ABS- oder AES-Polymerisate, Polyarylenether wie Polyphenylenether (PPE), Polysulfone, Polyurethane, Polylactide, halogenhaltige Polymerisate, imidgruppenhaltige Polymere, Celluloseester, Silicon-Polymere und Thermoplastische Elastomere. Es können auch Mischungen unterschiedlicher Thermoplaste als Materialien für die Kunststoffformteile eingesetzt werden. Bei diesen Mischungen kann es sich um ein-oder mehrphasige Polymerblends handeln.

Die zu beschriftenden oder miteinander zu verbindenden Kunststoffe können aus identischen oder verschiedenen Thermoplasten bzw. Thermoplast-Blends bestehen.

Polyoxyalkylenhomo- oder -copolymerisate, insbesondere (Co)polyoxymethylene (POM), und Verfahren zu deren Herstellung sind dem Fachmann an sich bekannt und in der Literatur beschrieben. Geeignete Materialien sind im Handel unter der Markenbezeichnung Ultraform^{®} (BASF AG, Deutschland) erhältlich. Ganz allgemein weisen diese Polymere mindestens 50 Mol-% an wiederkehrenden Einheiten -CH₂O-in der Polymerhauptkette auf. Die Homopolymeren werden im allgemeinen durch Polymerisation von Formaldehyd oder Trioxan hergestellt, vorzugsweise in der Gegenwart von geeigneten Katalysatoren. Bevorzugt sind Polyoxymethylencopolymere und Polyoxymethylenterpolymerisate. Die bevorzugten Polyoxymethylen(co)polymere haben Schmelzpunkte von mindestens 150°C und Molekulargewichte (Gewichtsmittelwert) M im Bereich von 5.000 bis 200.000, vorzugsweise von 7.000 bis 150.000 g/mol. Endgruppenstabilisierte Polyoxymethylenpolymerisate, die an den Kettenenden C-C-Bindungen aufweisen, werden besonders bevorzugt.

Geeignete Polycarbonate sind an sich bekannt und sind z.B. gemäß DE-B-1 300 266 durch Grenzflächenpolykondensation oder gemäß DE-A-14 95 730 durch Umsetzung von Biphenylcarbonat mit Bisphenolen erhältlich. Bevorzugtes Bisphenol ist 2,2-Di(4-hydroxyphenyl)propan, im allgemeinen als Bisphenol A bezeichnet. Die relative Viskosität dieser Polycarbonate liegt im allgemeinen im Bereich von 1,1 bis 1,5, insbesondere 1,28 bis 1,4 (gemessen bei 25°C in einer 0,5 gew.-%igen Lösung in Dichlormethan). Geeignete Polycarbonate sind im Handel unter der Markenbezeichnung Lexan^{®} (GE Plastics B.V., Holland) erhältlich.

Geeignete Polyester sind ebenfalls an sich bekannt und in der Literatur beschrieben. Sie enthalten einen aromatischen Ring in der Hauptkette, der von einer aromatischen Dicarbonsäure herrührt. Der aromatische Ring kann auch substituiert sein, z.B. durch Halogen wie Chlor und Brom oder durch C₁-C₄-Alkylgruppen wie Methyl-, Ethyl-, i-bzw. n-Propyl- und n-, i- bzw. tert.-Butylgruppen. Die Polyester können durch Umsetzung von aromatischen Dicarbonsäuren, deren Estern oder anderer esterbildender Derivate derselben mit aliphatischen Dihydroxyverbindungen in an sich bekannter Weise hergestellt werden. Als bevorzugte Dicarbonsäuren sind Naphthalindicarbonsäure, Terephthalsäure und Isophthalsäure oder deren Mischungen zu nennen. Bis zu 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden. Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt. Ais besonders bevorzugte Polyester sind Polyalkylenterephthalate, die sich von Alkandiolen mit 2 bis 6 C-Atomen ableiten, zu nennen. Von diesen werden insbesondere Polyethylenterephthalat (PET), Polyethylennaphthalat und Polybutylenterephthalat (PBT) bevorzugt. Diese Produkte sind im Handel z.B. unter den Markenbezeichnungen Rynite^{®} (PET; Fa. DuPont, USA) bzw. Ultradur^{®} (PBT; BASF AG) erhältlich. Die Viskositätszahl der Polyester liegt im allgemeinen im Bereich von 60 bis 200 ml/g (gemessen in einer 0,5 gew.-%igen Lösung in einem Phenol/o-Dichlorbenzol-Gemisch (Gew.-Verh. 1:1 bei 25°C)).

Geeignete Polyolefine stellen ganz allgemein Polyethylen und Polypropylen sowie Copolymerisate auf der Basis von Ethylen oder Propylen, ggf. auch mit höheren α-Olefinen, dar. Entsprechende Produkte sind z.B. unter den Handelsnamen Lupolen^{®} bzw. Novolen^{®} erhältlich. Unter Polyolefinen sollen auch Ethylen-Propylen-Elastomere und Ethylen-Propylen-Terpolymere verstanden werden.

Unter den Poly(meth)acrylaten sind insbesondere Polymethylmethacrylat (PMMA) sowie Copolymere auf der Basis von Methylmethacrylat mit bis zu 40 Gew.-% weiterer copolymerisierbarer Monomeren, wie n-Butylacrylat, t-Butylacrylat oder 2-Ethylhexylacrylat, zu nennen, wie sie beispielsweise unter den Bezeichnungen Lucryl^{®} (BASF AG) oder Plexiglas^{®} (Röhm GmbH, Deutschland) erhältlich sind. Im Sinne der Erfindung sind hierunter auch schlagzähmodifizierte Poly(meth)acrylate sowie Mischungen aus Poly(meth)acrylaten und SAN-Polymerisaten, die mit Polyacrylatkautschuken schlagzäh modifizier sind (z.B. das Handelsprodukt Terlux^{®} der BASF AG), zu verstehen.

Als Polyamide sind solche geeignet mit aliphatischem teilkristallinen oder teilaromatischen oder amorphem Aufbau jeglicher Art und deren Blends, einschließlich Polyetheramiden wie Polyetherblockamiden. Unter Polyamiden sollen alle bekannten Polyamide verstanden werden. Geeignete Polyamide weisen im allgemeinen eine Viskositätszahl von 90 bis 350, vorzugsweise 110 bis 240 ml/g auf (bestimmt in einer 0,5 gew.-%-igen Lösung in 96 gew.-%-iger Schwefelsäure bei 25°.C gemäß ISO 307). Halbkristalline oder amorphe Harze mit einem Molekulargewicht (Gewichtsmittelwert) von mindestens 5.000 g/mol, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt. Beispiele hierfür sind Polyamide, die sich von Lactamen mit 7 bis 13 Ringgliedern ableiten, wie Polycaprolactam, Polycapryllactam und Polylaurinlactam, sowie Polyamide, die durch Umsetzung von Dicarbonsäuren mit Diaminen erhalten werden. Als Dicarbonsäuren sind Alkandicarbonsäuren mit 6 bis 12, insbesondere 6 bis 10 Kohlenstoffatomen und aromatische Dicarbonsäuren einsetzbar. Hier seien Adipinsäure, Azelainsäure, Sebacinsäure, Dodecandisäure (= Decandicarbonsäure) und und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di-(4-aminophenyl)-propan oder 2,2-Di- (4-aminocyclohexyl)-propan.

Bevorzugte Polyamide sind Polyhexamethylenadipinsäureamid (PA 66), z.B. das Handelsprodukt Ultramid^{®} A (BASF AG), und Polyhexamethylensebacinsäureamid (PA 610), z.B. das Handelsprodukt Nylon^{®} 610 (Fa. DuPont), Polycaprolactam (PA 6), z.B. das Handelsprodukt Ultramid^{®} B (BASF AG) sowie Copolyamide 6/66, insbesondere mit einem Anteil von 5 bis 95 Gew.% an Caprolactam-Einheiten, z.B. das Handelsprodukt Ultramid^{®} C (BASF AG). PA 6, PA 66 und Copolyamide 6/66 sind besonders bevorzugt.

Außerdem seien auch noch Polyamide erwähnt, die z.B. durch Kondensation von 1,4-Diaminobutan mit Adipinsäure unter erhöhter Temperatur erhältlich sind (Polyamid-4, 6). Herstellungsverfahren für Polyamide dieser Struktur sind z.B. in den EP-A 38 094, EPA 38 582 und EP-A 39 524 beschrieben.
Weitere Beispiele sind Polyamide, die durch Copolymerisation zweier oder mehrerer der vorgenannten Monomeren erhältlich sind, oder Mischungen mehrerer Polyamide, wobei das Mischungsverhältnis beliebig ist.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Die Herstellung der teilaromatischen Copolyamide mit niedrigem Triamingehalt kann nach den in den EP-A 129 195 und 129 196 beschriebenen Verfahren erfolgen.

Weitere geeignete thermoplastische Materialien stellen vinylaromatische (Co)polymere dar. Das Molekulargewicht dieser an sich bekannten und im Handel erhältlichen Polymeren liegt im allgemeinen im Bereich von 1.500 bis 2.000.000, vorzugsweise im Bereich von 70.000 bis 1.000.000 g/mol.

Nur stellvertretend seien hier vinylaromatische (Co)polymere aus Styrol, Chlorstyrol, α-Methylstyrol und p-Methylstyrol genannt; in untergeordneten Anteilen, vorzugsweise nicht mehr als 20, insbesondere nicht mehr als 8 Gew.%, können auch Comonomere wie (Meth)acrylnitril oder (Meth)acrylsäureester am Aufbau beteiligt sein. Besonders bevorzugte vinylaromatische (Co)polymere sind Polystyrol, Styrol-Acrylnitril-Copolymere (SAN) und schlagzähmodifiziertes Polystyrol (HIPS = High Impact Polystyrene). Es versteht sich, dass auch Mischungen dieser Polymeren eingesetzt werden können. Die Herstellung erfolgt vorzugsweise nach dem in der EP-A-302 485 beschriebenen Verfahren.

Weiterhin sind ASA-, ABS- und AES-Polymerisate (ASA = Acrylnitril-Styrol-Acrylester, ABS = Acrylnitril-Butadien-Styrol, AES = Acrylnitril-EPDM-Kautschuk-Styrol) besonderes bevorzugt. Diese schlagzähen vinylaromatischen Polymere enthalten mindestens ein kautschukelastisches Pfropfpolymerisat und ein thermoplastisches Polymerisat (Matrixpolymerisat). Als Matrixmaterial wird im allgemeinen auf ein Styrol/Acrylnitril-Polymerisat (SAN) zurückgegriffen. Bevorzugt werden Pfropfpolymerisate verwendet, die als Kautschuk
- einen Dienkautschuk auf Basis von Dienen, wie z.B. Butadien oder Isopren, (ABS);
- einen Alkylacrylatkautschuk auf Basis von Alkylestern der Acrylsäure, wie n-Butylacrylat und 2-Ethylhexylacrylat, (ASA);
- einen EPDM-Kautschuk auf Basis von Ethylen, Propylen und einem Dien, (AES); oder Mischungen dieser Kautschuke bzw. Kautschukmonomeren enthalten.

Die Herstellung von geeigneten ABS-Polymerisaten findet sich z.B. in der deutschen Patentanmeldung DE-A 19728629 eingehend beschrieben. Für die Herstellung von ASA-Polymerisaten kann z.B. auf die EP-A 99 532 zurückgegriffen werden. Angaben über die Herstellung von AES-Polymerisaten sind beispielsweise in der US 3,055,859 oder in der US 4,224,419 offenbart. Auf die in diesem Absatz genannten Patentschriften wird hiermit ausdrücklich Bezug genommen.

Unter Polyarylenethern sind bevorzugt sowohl Polyarylenether an sich, Polyarylenethersulfide, Polyarylenethersulfone oder Polyarylenetherketone zu verstehen. Deren Arylengruppen können gleich oder verschieden sein und unabhängig voneinander einen aromatischen Rest mit 6 bis 18 C-Atomen bedeuten. Beispiele geeigneter Arylenreste sind Phenylen, Bisphenylen, Terphenylen, 1,5-Naphthylen, 1,6-Naphthylen, 1,5-Anthrylen, 9,10-Anthrylen oder 2,6-Anthrylen. Darunter werden 1,4-Phenylen und 4,4'-Biphenylen bevorzugt. Vorzugsweise sind diese aromatischen Reste nicht substituiert. Sie können jedoch einen oder mehrere Substituenten tragen. Geeignete Polyphenylenether sind unter der Bezeichnung Noryl^{®} (GE Plastics B.V., Holland) kommerziell erhältlich.

Im allgemeinen weisen die Polyarylenether mittlere Molekulargewichte M (Zahlenmittel) im Bereich von 10.000 bis 60.000 g/mol und Viskositätszahlen von 30 bis 150 ml/g auf. Die Viskositätszahlen werden je nach Löslichkeit der Polyarylenether entweder in 1 Gew.-%iger N-Methylpyrrolidon-Lösung, in Mischungen aus Phenol und o-Dichlorbenzol oder in 96%-iger Schwefelsäure bei jeweils 20°C bzw. 25°C gemessen.

Die Polyarylenether sind an sich bekannt oder können nach an sich bekannten Methoden hergestellt werden.
Bevorzugte Verfahrensbedingungen zur Synthese von Polyarylenethersulfonen oder -ketonen sind beispielsweise in der EP-A 113 112 und EP-A 135 130 beschrieben. Polyarylenethersulfone weisen in der Regel einen Schmelzpunkt von mindestens 320°C, Polyarylenetherketone von mindestens 370°C auf. Geeignete Polyphenylenethersulfone sind z.B. unter der Bezeichnung Ultrason^{®} E (BASF AG), geeignete Polyphenylenethterketone unter der Bezeichnung Victrex^{®} im Handel erhältlich.

Des weiteren sind Polyurethane, Polyisocyanurate und Polyharnstoffe geeignete Materialien für die Herstellung der Kunststoffformteile. Weiche, halbharte oder harte, thermoplastische oder vernetze Polyisocyanat-Polyadditionsprodukte, beispielsweise Polyurethane, Polyisocyanurate und/oder Polyharnstoffe, insbesondere Polyurethane, sind allgemein bekannt und im Handel u.a. unter der Bezeichnung Elastolan^{®} (Elastogran GmbH, Deutschland) erhältlich. Ihre Herstellung ist vielfältig beschrieben und erfolgt üblicherweise durch Umsetzung von Isocyanaten mit gegenüber Isocyanaten reaktiven Verbindungen bei allgemein bekannten Bedingungen. Bevorzugt wird die Umsetzung in Gegenwart von Katalysatoren und/oder Hilfsstoffen durchgeführt. Wenn es sich um geschäumte Polyisocyanat-Polyadditionsprodukte handelt, so werden diese in Gegenwart von üblichen Treibmitteln hergestellt.

Als Isocyanate kommen die an sich bekannten aromatischen, arylaliphatischen, aliphatischen und/oder cycloaliphatischen organischen Isocyanate, bevorzugt Diisocyanate in Frage.
Als gegenüber Isocyanaten reaktive Verbindungen können beispielsweise allgemein bekannte Verbindungen mit einem Molekulargewicht von 60 bis 10.000 g/mol und einer Funktionalität gegenüber Isocyanaten von 1 bis 8, bevorzugt 2 bis 6 eingesetzt werden (im Falle von thermoplastischen Polyurethanen TPU Funktionalität ca. 2), beispielsweise Polyole mit einem Molekulargewicht von 500 bis 10.000 g/mol, z.B. Polyetherpolyole, Polyesterpolyole, Polyetherpolyesterpolyole, und/oder Diole, Triole und/oder Polyole mit Molekulargewichten kleiner 500 g/mol.

Polylactide, also Polymere der Milchsäure, sind an sich bekannt oder können nach an sich bekannten Verfahren hergestellt werden. Neben Polylactid können auch Co-oder Blockcopolymere auf der Basis von Milchsäure und weiteren Monomeren verwendet werden. Meist werden lineare Polylactide eingesetzt. Es können aber auch verzweigte Milchsäurepolymerisate verwendet werden. Als Verzweiger können z.B. mehrfunktionelle Säuren oder Alkohole dienen.

Als geeignete halogenhaltige Polymerisate sind insbesondere Polymerisate des Vinylchlorids zu nennen, insbesondere Polyvinylchlorid (PVC) wie Hart-PVC und Weich-PVC, und Copolymerisate des Vinylchlorids wie PVC-U-Formmassen.

Weiterhin kommen fluorhaltige Polymere in Betracht, insbesondere Polytetrafluorethylen (PTFE), Tetrafluorethylen-PerfluorpropylenCopolymere (FEP), Copolymere des Tetrafluorethylens mit Perfluoralkylvinylether, Ethylen-Tetrafluorethylen-Copolymere (ETFE) Polyvinylidenfluorid (PVDF), Polyvinylfluorid (PVF), Polychlortrifluorethylen (PCTFE), und Ethylen-Chlortrifluorethylen-Copolymere (ECTFE).

Imidgruppenhaltige Polymere sind insbesondere Polyimide, Polyetherimide, und Polyamidimide.

Geeignete Celluloseester sind etwa Celluloseacetat, Celluloseacetobutyrat, und Cellulosepropionat.

Daneben kommen auch Silicon-Polymere als Thermoplaste in Betracht. Geeignet sind insbesondere Siliconkautschuke. Dabei handelt es sich üblicherweise um Polyorganosiloxane, die zu Vernetzungsreaktionen fähige Gruppen aufweisen. Derartige Polymere werden beispielsweise in Römpp Chemie Lexikon, CD-ROM Version 1.0, Thieme Verlag Stuttgart 1995, beschrieben.

Schließlich kann auch die Verbindungsklasse der Thermoplastischen Elastomere (TPE) herangezogen werden. TPE lassen sich wie Thermoplaste verarbeiten, haben jedoch kautschukelastische Eigenschaften. Es sind TPE-Blockpolymere, TPE-Pfropfpolymere und segmentierte TPE-Copolymere aus zwei oder mehr

Monomerbausteinen geeignet. Besonders geeignete TPE sind thermoplastische Polyurethanelastomere (TPE-U oder TPU), Styrol-Oligoblock-Copolymere (TPE-S) wie SBS (Styrol-Butadien-Styrol-oxyBlockcopolymer) und SEES (Styrol-Ethylen-Butylen-Styrol-Blockcopolymer, erhältlich durch Hydrieren von SBS), thermoplastische Polyolefin-Elastomere (TPE-O), thermoplastische Polyester-Elastomere (TPE-E), thermoplastische Polyamid-Elastomere (TPE-A) und insbesondere thermoplastische Vulkanisate (TPE-V). Einzelheiten zu TPE findet der Fachmann in G. Holden et al., Thermoplastic Elastomers, 2. Auflage, Hanser Verlag, München 1996.

In den vorgenannten thermoplastischen Kunststoffen lässt sich das erfindungsgemäße Lasermarkierungsmittel hervorragend einarbeiten. Aus der dann erhaltenen Kunststoff-Lasermarkierungsmittel-Mischung können dann durch thermisches Umformen die gewünschten Formkörper, bspw. Flaschen, Tassen, Schalen, etc. hergestellt werden.

Der erfindungsgemäße lasermakierbare und/oder laserschweißbare Kunststoff kann durch ein Verfahren hergestellt werden, bei dem die vorstehend beschriebenen sphärischen Metallpartikel in das Kunststoffmaterial eingebracht werden. Die Mengen der eingebrachten Metallpartikel können in Abhängigkeit von Kunststoffen und/oder Verwendungszweck eingestellt werden. Die Einbringung der Partikel in das Kunststoffmaterial kann in einem üblichen Mischer oder aber auch in einem Extruder auf herkömmliche Weise erfolgen. Ein Verfahren zur Herstellung des lasermarkierbaren und/oder laserverschweißbaren Kunststoffs, bei dem sphärische Metallpartikel in ein Kunststoffmaterial eingebracht werden, ist ebenfalls Gegenstand der vorliegenden Erfindung.

Gemäß einer bevorzugten Ausführungsform beträgt der Anteil der Metallpartikel in dem lasermarkierbaren und/oder laserschweißbaren Kunststoff 0,0005 bis 0,8 Gew.-%, vorzugsweise 0,001 bis 0,5 Gew.-%, wobei sich die Angaben jeweils auf das Gesamtgewicht des Kunststoffs beziehen.

Überraschenderweise sind die vorteilhaften Eigenschaften des erfindungsgemäßen lasermarkierbaren- und/oder laserschweißbaren Kunststoffs schon mit sehr geringen Gehalten an Lasermarkierungsmittel erreichbar. Unterhalb von 0,0005 Gew.-% Lasermarkierungsmittel können die erfindungsgemäßen Vorteile nicht mehr oder nur noch sehr eingeschränkt festgestellt werden.

Weiterhin ist bevorzugt, dass der Anteil der Metallpartikel in dem Kunststoff bei 0,005 bis 0,5 Gew.-%, noch weiter bevorzugt 0,01 bis 0,2 Gew.-%, jeweils bezogen auf das Gesamtgewicht des lasermarkierbaren Kunststoffs beträgt.

Bei den verwendeten Metallen stellte sich heraus, dass in niedrigen Konzentrationen insbesondere Metallpartikel bestehend aus Aluminium, Silber, Kupfer oder Eisen die besten Ergebnisse brachten. Somit besteht eine weitere, bevorzugte Ausführungsform aus Kunststoffen enthaltend sphärische Metallpartikel aus diesen Metallen oder Legierungen dieser Metalle, vorzugsweise in Konzentrationen von 0,0005 bis 0,015 Gew.-% bezogen auf den gesamten Kunststoff.

Die vorliegende Erfindung erlaubt es, mit einem Laserstrahl kontrastreich zu markierende oder zu beschriftende Kunststoffe herzustellen.

Ab einer Menge von 0,2 Gew.-%, bezogen auf das Gesamtgewicht des Kunststoffs, kann das Material opak werden. In einem Mengenbereich zwischen 0,05 Gew.-% und 0,2 Gew.-% kann eine erste Trübung auftreten, die sich mit zunehmender Konzentration zu einer gräulichen Einfärbung des Materials steigern kann. Oberhalb von 0,8 Gew.% ist der Kunststoff zu opak. Zudem ist kein weiterer Vorteil der Qualität der Lasermarkierbarkeit erkennbar. Somit würde die Verwendung von mehr Lasermarkierungsmittel nur unnötig die Herstellkosten des lasermarkierbaren Kunststoffs steigern.

Der Gehalt an sphärischen Metallpartikeln im Kunststoff kann im Einzelfall in Abhängigkeit der Schichtdicke des zu markierenden Materials eingestellt werden, wobei vorzugsweise der Gehalt an sphärischen Metallpartikeln mit abnehmender Schichtdicke erhöht werden kann.

So liegt die Schichtdicke einer Folie üblicherweise in einem Bereich von 20 µm bis ca. 5 mm. Die Dicke von spritzgegossenen Kunststoffen kann bis zu ca. 6 cm betragen.

Im Falle einer Folie kann der Gehalt an sphärischen Metallpartikeln im Vergleich zu einem Kunststoffformkörper erhöht sein. Beispielsweise kann bei einem Kunststoffformkörper ein Gehalt von 0,005 Gew.-% sphärischer Metallpartikel verwendet werden, wohingegen bei einer Folie ein Gehalt von 0,02 Gew.-% sphärischer Metallpartikel geeignet sein kann. Der geeignete Gehalt an sphärischen Metallpartikeln kann anhand von Versuchen vom Fachmann ohne weiteres ermittelt werden.

Eine kontrastreiche Markierung eines Kunststoffs ist - wie in den Beispielen gezeigt wird - schon mit einer Konzentration an Metallpartikel von 0,005 Gew.-% möglich. Die Konzentrationsangaben in Gew.-% beziehen sich dabei jeweils auf das Gesamtgewicht des Materials und der Metallpartikel.

Vorzugsweise liegt bei einer Schichtdicke des Kunststoffs in einem Bereich von 20 µm bis 500 µm der Anteil an Metallpartikeln in einem Bereich von 0,005 bis .0,2 Gew.%, weiter bevorzugt von 0,02 bis .0,05, jeweils bezogen auf das Gesamtgewicht aus Kunststoff und Metallpartikel.

Bei einer Schichtdicke des Kunststoffs im Bereich von 500 µm bis 2 mm liegt der Anteil an Metallpartikeln vorzugsweise in einem Bereich von 0,001 bis .0,1 Gew.-%., weiter bevorzugt von 0,005 bis 0,05, jeweils bezogen auf das Gesamtgewicht aus Kunststoff und Metallpartikel.

Es wurde völlig überraschend festgestellt, dass - wie in den Beispielen gezeigt wird - ein Kunststoff, der Metallpartikel mit einer Menge in einem Bereich von 0,005 bis zu 0,05 Gew.-% enthält, vollkommen transparent ist und zugleich hervorragend mit einem Laserstrahl kontrastreich markiert werden kann. Vorzugsweise wird in einem Konzentrationsbereich von 0,01 bis 0,04 Gew.-% Metallpartikel gearbeitet.

Die geringe Menge an zu verwendendem Lasermarkierungsmittel bietet gleich mehrere Vorteile. So werden die Materialeigenschaften des Kunststoffmaterials nicht bzw. nicht wesentlich durch den Zusatz des erfindungsgemäßen Lasermarkierungsmittels beeinflusst.

Bei Verwendung von Metallpartikeln in einem Bereich von 0,001 bis 0,05 Gew.% in einem transparenten oder klaren Kunststoffmaterial kommt es mithin zu keiner bzw. zu keiner wesentlichen Verschlechterung der Transparenz bzw. der Farbeigenschaften des mit dem Lasermarkierungsmittel der vorliegenden Erfindung dotierten Materials, wobei jedoch überraschenderweise ein kontrastreiches Markieren oder Kennzeichnen mit einem Laserstrahl möglich ist.

Darüber hinaus ermoglicht die vorliegende Erfindung die äußerst preisgünstige Bereitstellung eines Kunststoffmaterials, da das Lasermarkierungsmittel aus preisgünstigen Materialien hergestellt und nur in geringem Umfang dem zu markierenden Material zugesetzt werden muss. Dies ist ein wesentlicher wirtschaftlicher Vorteil der vorliegenden Erfindung.

Es ist für bestimmte Anwendungen vorteilhaft, wenn der erfindungsgemäße Kunststoff im wesentlichen keine Perlglanzpigmente enthält. Die Nachteile von Perlglanzpigmenten in lasermarkierbaren Kunststoffen wurden weiter oben bereits ausgeführt: Perlglanzpigmente heben die meistens vorhandenen, unerwünschten Fließlinien in Kunststoffen hervor und führen zu einer farblichen Veränderung, d.h. zu einem Perlglanzeffekt. Dieser ist in gewissen Fällen aus dekorativen Gründen gewünscht, in vielen Fällen soll jedoch das Lasermarkierungsmittel die farblichen Eigenschaften des Kunststoffs nicht beeinflussen, d.h. das Lasermarkierungsmittel muss transparent sein. Der Kunststoff selbst soll ebenfalls farblos transparent oder auch monochrom eingefärbt sein (z.B. blau, rot, gelb, usw.). Eine dekorative Einfärbung durch Perlglanz ist in diesen Fällen nicht erwünscht.
Daher sollen die erfindungsgemäßen Kunststoffe Perlglanzpigmente maximal in Mengen enthalten, in denen sie noch transparent wirken und keine Fließlinien verursachen. Demgemäß können die erfindungsgemäßen lasermarkierbaren und/oder laserschweißbaren Kunststoffe Perlglanzpigmente in Konzentrationen von 0 bis 0,1 Gew.%, bevorzugt von 0,0 bis 0,05 Gew.-% bezogen auf den gesamten Kunststoff, enthalten. Die genauen Konzentrationen, ab denen die nachteiligen Eigenschaften der Perlglanzpigmente nicht mehr beobachtet werden, hängen natürlich von weiteren Parametern wie insbesondere der Schichtdicke des Kunststoffs ab, können vom Fachmann jedoch ohne weiteres ermittelt werden.

Besonders bevorzugt enthalten derartige erfindungsgemäße lasermarkierbare und/oder laserschweißbare Kunststoffe keine Perlglanzpigmente.

Die erfindungsgemäßen lasermarkierbaren und/oder laserschweißbaren Kunststoffe können weiterhin übliche Zusatzstoffe enthalten. Diese Zusatzstoffe können beispielsweise aus der Gruppe, die aus Füllstoffen, Additiven, Weichmachern, Gleit-oder Entformungsmitteln, Schlagzähigkeitsverbesserern, Farbpigmenten, Farbstoffen, Flammschutzmitteln, Antistatika, Optischen Aufhellern, Antioxidantien, antimikrobiell wirksame Biostabilisatoren, Chemischen Treibmitteln oder organischen Vernetzungsmitteln sowie andere Zusatzstoffen oder deren Mischungen davon besteht, ausgewählt werden.

Beispiele für verwendbare Füllstoffe sind: CaCO₃ (z.B. Omya,Köln; Ulmer Füllstoff Vertrieb), Dolomit (z.B. Ziegler, Wunsiedel; Blancs Mineraux de Paris), CaSO₄ (US Gypsum, Chicago), Silikate (Degussa, Frankfurt; Quarzwerke, Frechen), Glaskugeln (Potter; GB; Owens Corning, Wiesbaden), Talkum (Norwegian Talc; Nordbayrische Farben- und Mineralwerke, Hof), Kaolin (AKW, Hirschau; Luh, Walluf), Glimmer (Norwegian Talc; Dorfner, Hirschau), Feldspat (Omya, Paris), Silikatkugeln (Langer, Ritterhude), Silica (siehe Silikate), BaSO₄ (Sachtleben, Duisburg; Scheruhn, Hof), Al₂O₃ oder Al(OH)₃.(beide: Martinswerk, Bergheim).

Die Additive können beispielsweise Dispergieradditive, Antioxidantien, Metalldesaktivatoren und/oder Licht- und UV-Schutzmittel umfassen.

Geeignete Antioxidantien (Wärmestabilisatoren) sind etwa sterisch gehinderte Phenole, Hydrochinone, Arylamine, Phosphite, verschiedene substituierte Vertreter dieser Gruppe, sowie deren Mischungen. Sie sind etwa als Topanol^{®},(ICI, London) Irgafos^{®}, Irganox^{®}, (beide Ciba-Geigy, Basel), Hostanox^{®} (Clariant, Frankfurt) oder Naugard^{®} (Uniroyal, GB) im Handel erhältlich.

Beispiele für verwendbare Metalldesaktivatoren sind_Carbonsäureamide, Hydrazone, Hydrazine, Melaminderivate, Benzotriazole, Phosphonsäureester und/oder Thiazolderivate.
Beispiele: Hostanox (Clariant, Frankfurt), Irganox (Ciba Geigy, Basel), Naugard (Uniroyal, GB).

Beispiele für verwendbare Licht- und UV-Schutzmittel sind: Benzophenone, Benzotriazole, org. Ni-verbindungen, Salizylsäureester, Cyanzimtsäureester, Benzylidenmalonate, Benzoesäureester, Oxalanilide und/oder sterisch gehinderte Amine, die monomer und polymer sein können.
Beispiele: Chimasorb, Tinuvin (beide Ciba-Geigy, Basel), Cyasorb (American Cyanamid), Hostavin (Clariant, Frankfurt), Uvinul (BASF, Ludwigshafen)

Beispiele für verwendbare Weichmacher sind: Phthalsäureester, Phosphorsäureester, Adipinsäureester, Azelainsäureester, Glutarsäureester, Sebazinsäureester, Fettsäureester, vorzugsweise Oleate, Stearate, Rizinolate, Laurate und/oder Octoate, mit Pentaerythritol, Glykolen, Glyzerin u.s.w., epoxidierte Fettsäureester, Zitronensäureester, Polyester, Benzoesäureester, Trimellithsäureester, Sulfonsäureester, Sulfamide, Anilide, Polymerisate, Polykondensate, Polyethylenglykole, Abietinsäureester und/oder Derivate, Ester der Essig-, Propion-, Butter-, Ethylbutter- und/oder Ethylhexansäure.
Beispiele: Carbowax (DOW, Belgien), Cetamoll (BASF, Ludwigshafen), Edenol (Henkel, Düsseldorf), Elvaloy (DuPont de Nemours, USA), Lankroflex, (Lankro, GB), Palamoll, Palatinol (beide BASF, Ludwigshafen).

Beispiele für verwendbare Gleitmittel sind: Fettalkohole, Dicarbonsäureester, Fettsäuren des Glyzerins und anderer kurzkettiger Alkohole, Fettsäuren, Fettsäureamide, Metallsalze von Fettsäuren, oligomere Fettsäureester, Fettalkohol-Fettsäureester, Wachssäuren und deren Ester und Seifen, polare Polyethylenwachse und Folgeprodukte, unpolare Polyolefinwachse, natürliche und synthetische Paraffine, Siliconöle und/oder Fluorpolymere.
Beispiele: Licowax, Ceridust, Licolub, Licomont (alle Clariant, Frankfurt), Irgawax (Ciba-Geigy, Basel), Loxiol (Henkel, Düsseldorf), Bärolub (Bärlocher, München).

Beispiele für verwendbare Schlagzähigkeitsverbesserer sind: Elastomere (EPM bzw. EPDM, Polyacrylate, Polybutadien, Textilglasfasern, Aramidfasern und/oder Kohlenstofffasern.

Die Farbmittel können anorganische Pigmente und/oder organische Pigmente und/oder organische Farbstoffe umfassen. Es werden jedoch im wesentlichen keine Effektpigmente verwendet.

Beispiele für verwendbare Flammschutzmittel sind: Geeignete Flammschutzmittel sind z.B. die dem Fachmann bekannten halogenhaltigen Verbindungen, allein oder zusammen mit Antimontrioxid, oder phosphorhaltige Verbindungen, Magnesiumhydroxid, roter Phosphor, sowie andere gebräuchliche Verbindungen oder deren Mischungen. Unter bekannte Flammschutzmittel fallen z.B. die in der DE-A 196 326 75 oder die in der Encyclopedia of Chemical Technology, Hrsg. R. Kirk und D. Othmer, Vol. 10, 3. Aufl., Wiley, New York, 1980, Seiten 340 bis 420, offenbarten Phosphorverbindungen, wie Phosphate, z.B. Triarylphosphate wie Triskresylphosphat, Phosphite, z.B. Triarylphosphite, oder Phosphonite. Als Phosphonite werden in der Regel Bis-(2,4-di-tert.butylphenyl)-phenylphosphonit, Tris- (2,4-di-tert.butylphenyl) -phosphonit, Tetrakis-(2,4-di-tert.butyl-6-methylphenyl) - 4,4' -biphenylylen-diphosphonit, Tetrakis-(2,4-di-tert.butylphenyl) -4,4'-biphenylylendiphosphonit, Tetrakis-(2,4-di-methylphenyl) -1,4-phenylylendiphosphonit, Tetrakis-(2,4-di-tert.butylphenyl) -1,6-hexylylen- diphosphonit und/oder Tetrakis-(3,5-di-methyl-4-hydroxyphenyl) -4,4' -biphenylylen-diphosphonit, Tetrakis-(3,5-di-tert.butyl-4 -hydroxy-phenyl) -4,4' -biphenylylen-diphosphonit verwendet. Beispiele: Fire Fighters (Great Lakes Chemicals), Fyrol (Dead Sea Bromine, Israel, Martinal (Martinswerk, Bergheim), Reofos (Ciba-Geigy, Basel), Phosflex (Akzo Chemicals, USA).

Beispiele für verwendbare Antistatika sind: Ethoxylierte Fettamine, aliphatische Sulfonate, quartäre Ammoniumverbindungen und/oder polare Fettsäureester. Beispiele: Bärostat (Bärlocher, München), Dehydat (Henkel, Düsseldorf), Hostastat (Clariant, Frankfurt), Irgastat (Ciba-Geigy, Basel).

Beispiele für verwendbare optische Aufheller sind: Bis-Benzotriazole, Phenylcumarinderivate, Bis-styrylbiphenyle und/oder Pyrentriazine,
Beispiele: Hostalux (Clariant, Frankfurt), Uvitex (Ciba-Geigy, Basel).

Beispiele für verwendbare antimikrobiell wirksame Biostabilisatoren sind: 10,10'-(Oxy-bis-phenoxarsin, N-(Trihalogenmethylthio-)phthalimid, Diphenylantimon-2-ethylhexanoat, Cu-8-hydroxychinolin, Tributylzinnoxid und/oder deren Derivate Beispiele: Cunilate (Ventron, B), Preventol (Bayer, Leverkusen), Fungitrol (Tenneco, USA).

Beispiele für verwendbare chemische Treibmittel sind: Azodicarbonamid und Derivate, Hydrazin-Derivate, Semicarbazide, Tetrazole, Benzoxazine und/oder Zitronensäure+NaHCO₃.
Beispiele: Hydrocerol 8 (Böhringer, Ingelheim), Porofor (Bayer, Leverkusen), Genitron (Schering, GB).

Beispiele für verwendbare organische Vernetzungsmittel sind: Diaralkylperoxide, Alkylaralkylperoxide, Dialkylperoxide, tert.-Butylperoxybenzoat, Diacylperoxide und/oder Peroxyketale.
Beispiele: Interox (Peroxidchemie, Höllriegelskreuth), Luperco, Luperox (Luperox, Günzburg).

Gemäß einer bevorzugten Variante der vorliegenden Erfindung ist der lasermarkierbare und/oder laserschweißbare Kunststoff eine Kunststofffolie oder ein Etikett, vorzugsweise ein Klebeetikett.

Üblicherweise werden Produkte, auch Lebensmittel, mit transparenten Kunststofffolien umhüllt.

Eine unter Verwendung der vorliegenden Erfindung hergestellte Kunststofffolie ermöglicht mithin eine berührungslose und unveränderliche Beschriftung oder Kennzeichnung. Die Beschriftung oder Kennzeichnung der Kunststofffolie kann sowohl vor als auch nach Umhüllung des Produktes erfolgen.

Bei einer Variante der vorliegenden Erfindung liegt der Kunststoff als Etikett, vorzugsweise als Klebeetikett, vor. Bei Produkten, die nicht mit einer Kunststofffolie, sondern lediglich mit einem Klebeetikett versehen werden, bietet die Ausgestaltung des Kunststoffs in Form eines Klebeetiketts ebenfalls die Möglichkeit, die Etiketten unter Verwendung eines Laserstrahls zu beschriften bzw. zu kennzeichnen.

Gemäß einer weiteren Ausführungsform der vorliegenden Erfindung liegt der Kunststoff als dreidimensionaler Kunststoffkörper, vorzugsweise als Kunststoffbehälter vor. Auf den Kunststoffbehälter kann bspw. die maximale Haltbarkeit von Lebensmitteln, Chemikalien, Medikamenten, etc. angegeben werden.

Der dreidimensionale Kunststoffkörper kann auch bspw. in Form eines Datenträgers wie einer CD, DVD, CD-ROM, etc. ausgebildet sein. Anhand einer abriebfesten und unveränderlichen Kennzeichnung können Original von Fälschungen unterschieden werden. Der dreidimensionale Kunststoffkörper kann bspw. auch ein Blisterstrip sein, in dem üblicherweise Medikamente in Tabletten oder Kapselform vertrieben werden. Beispielsweise können Etiketten oder Kunststoffe, insbesondere Kunststoffbehälter, mittels Laserstrahl mit einem Barcode versehen werden.

In weiteren erfindungsgemäßen Ausführungsformen kann der lasermarkierbare und/oder laserschweißbarer Kunststoff ein Bestanteil eines Gegenstandes, der selbst nicht lasermarkierbar und/oder laserschweißbar sein muss, sein.

Die Beschriftung mit einem handelsüblichen Laser erfolgt derart, dass ein Probenkörper in den Strahlengang eines Lasers gebracht wird. Die erhaltene Markierung wird durch die Bestrahlungszeit (bzw. Pulszahl bei Pulslasern) und Bestrahlungsleistung des Lasers sowie des Kunststoffsystems, bestimmt Die Leistung der verwendeten Laser hängt von der jeweiligen Anwendung ab und kann im Einzelfall vom Fachmann ohne weiteres ermittelt werden.

Prinzipiell sind alle üblichen Laser geeignet, beispielsweise Gaslaser und Festkörperlaser. Gaslaser sind z.B. (in Klammern ist die typische Wellenlänge der emittierten Strahlung angegeben):
CO₂-Laser (10,6 µm), Argon-Gaslaser (488 nm und 514,5 nm), Helium-Neon-Gaslaser (543 nm, 632,8 nm, 1150 nm), Krypton-Gaslaser (330 bis 360 nm, 420 bis 800 nm), Wasserstoff-Gaslaser (2600 bis 3000 nm) und Stickstoff-Gaslaser (337 nm).

Festkörperlaser sind z.B. (in Klammern die typische Wellenlänge der emittierten Strahlung):
Nd:YAG-Laser (Nd³⁺Y₃Al₅O₁₂) (1064 nm) Hochleistungsdioden-Laser (800 bis 1000 nm), Rubinlaser (694 nm), F₂-Excimerlaser (157 nm), ArF-Excimerlaser (193 nm), KrCl-Excimerlaser (222 nm), KrF-Excimerlaser (248 nm) XeCl-Excimerlaser (308 nm), XeF-Excimerlaser (351 nm) sowie frequenzvervielfachte Nd:YAG-Laser mit Wellenlängen von 532 nm (frequenzverdoppelt), 355 nm (frequenzverdreifacht) oder 266 nm (frequenzvervierfacht).

Bevorzugte Laser für Laserbeschriftungen sind der Nd:YAG-Laser (Nd ³⁺Y₃Al₅O₁₂) (1064 nm).
Für die Laserschweißbarkeit ist bevorzugt der Nd:YAG-Laser (Nd ³⁺Y₃Al₅O₁₂) (1064 nm) sowie der Hochleistungsdioden-Laser (800 bis 1000 nm), die beide im kurzwelligen Infrarot emittieren.

Die verwendeten Laser werden üblicherweise bei Leistungen von 1 bis 400, bevorzugt 5 bis 100 und insbesondere 10 bis 50 Watt betrieben.

Die Energiedichten der eingesetzten Laser liegen im allgemeinen im Bereich von 0,3 mJ/cm² bis 50, J/cm² vorzugsweise 0,3 mJ/cm² bis 10 J/cm². Bei der Verwendung von gepulsten Lasern liegt die Pulsfrequenz im allgemeinen im Bereich von 1 bis 30 kHz. Entsprechende Laser, die vorliegend verwendet werden können, sind kommerziell erhältlich.

Ein sehr großer Vorteil des erfindungsgemäßen Lasermarkierungsmittels ist, dass die Wellenlänge des Laserstrahls nicht spezifisch auf die sphärischen Metallpartikel eingestellt werden muss. Metalle haben im Unterschied zu Metalloxiden ein breites Absorptionsvermögen, weshalb unterschiedlichste Laser mit verschiedenen

Wellenlängen zur Lasermarkierung eines mit dem erfindungsgemäßen Lasermarkierungsmaterial dotieren Kunststoffs verwendet werden können.

Im Stand der Technik werden teilweise Metalloxide wie Antimon-dotiertes Zinnoxid als Absorbermaterialien verwendet. Ungeachtet der toxikologischen Risiken erfordern diese Oxide die Verwendung einer definierten Wellenlänge an Laserlicht, um eine Markierung bewirken zu können, was in der Handhabung aufwendig ist.

Die Verwendung eines mit dem erfindungsgemäßen Lasermarkierungsmittel dotierten Kunststoffs kann auf allen Gebieten erfolgen, wo bisher übliche Druckverfahren zur Beschriftung von Kunststoffen eingesetzt werden. Beispielsweise können Formkörper aus mit dem erfindungsgemäßen Lasermarkierungsmittel dotiertem Kunststoff in der Elektro-, Elektronik- und Kraftfahrzeugindustrie Anwendung finden. Die Kennzeichnung und Beschriftung von z.B. Kabeln, Leitungen, Zierleisten bzw. Funktionsteilen im Heizungs-, Lüftungs- und Kühlbereich oder Schalter, Stecker, Hebel und Griffe, die aus mit dem erfindungsgemäßen Lasermarkierungsmittel dotierten Kunststoff bestehen, können selbst an schwer zugänglichen Stellen mit Hilfe von Laserlicht markiert werden.

Weiterhin können mit dem erfindungsgemäßen Lasermarkierungsmittel dotierte Kunststoffsysteme bei Verpackungen im Lebensmittelbereich oder im Spielzeugbereich eingesetzt werden. Die Markierungen auf den Verpackungen zeichnen sich insbesondere dadurch aus, dass sie wisch- und kratzfest, stabil bei nachträglichen Sterilisationsprozessen, und hygienisch rein beim Markierungsprozess aufbringbar sind.

Ein weiteres wichtiges Anwendungsgebiet für die Laserbeschriftung sind Kunststoffmarken zur individuellen Kennzeichnung von Tieren, sogenannte Cattle Tags oder Ohrmarken. Über ein Barcodesystem werden die Informationen gespeichert, welche spezifisch dem Tier zugehörig sind. Diese können bei Bedarf wieder mit Hilfe eines Scanners abgerufen werden. Die Beschriftung muss sehr dauerhaft werden, da die Ohrmarken teilweise über mehrere Jahre an den Tieren verbleiben.

Lasermarkierbare Kunststoffe umfassen Thermoplaste, Duroplaste, Elastomere oder Kautschuk.

Laserschweißbare Kunststoffe umfassen naturgemäß stets Thermoplaste.

In einer weiteren Ausführungsform werden die Lasermarkierungsmittel in Kunststoffen zur Laser-Innengravur zur Erzeugung zwei- oder dreidimensionaler Bildstrukturen verwendet. Laser-Innengravurverfahren sind beispielsweise in der DE 10 2005 011 180 A1 beschrieben. Sphärische Metallpulver, die für diese Zwecke besonders geeignet sind, umfassen eine Korngrößenverteilung mit einem D₉₉-Wert < 40 µm und einem D₉₀-Wert von < 20 µm verwendet. Bei diesen sphärischen Metallpartikel ist vorzugsweise der D₅₀-Wert der Korngrößenverteilung < 11 µm.

Die vorliegende Erfindung wird anhand der nachfolgenden Beispiele veranschaulicht, ohne jedoch darauf beschränkt zu sein.

### Erfindungsgemäßes Beispiel 1:

Ein Pulver aus sphärischen Aluminiumpartikeln (Fa. ECKART GmbH & Co. KG, Fürth, Deutschland) mit einem D₅₀-Wert von 1,57 µm, einem D₉₀-Wert von 3,37 µm und einem D₉₉-Wert von 7,55 µm (bestimmt mittels Lasergranulometrie mit Gerät Helos, Fa. Sympatec, Deutschland) wurde in Mischung mit thermoplastischem Polypropylen (PP) (R 771 - 10; Fa. DOW, Deutschland, Wesseling) im Spritzgussverfahren zu Platten (Fläche 42 × 60 mm, Dicke 2 mm) verarbeitet.

Zur Herstellung eine 1 Gew.-%igen Mischung wurde wie folgt verfahren:
495 g Polypropylen-Granulat und 5 g des Aluminium-Pulvers wurden in einem Taumelmischer vermischt und nachfolgend in einem Doppelschneckenextruder (Fa. Bersdorff, Deutschland, Durchmesser 25 mm, 28UD) ohne Zugabe weiterer Additive bei einer Verarbeitungstemperatur von ca. 230 °C zu einem Granulat verarbeitet. Dieses Granulat wurde anschließend mittels Spritzgießmaschine (Arburg Allrounder 221-55-250) bei der jeweiligen stoffspezifischen Verarbeitungstemperatur (z.B. PP 260 °C) zu den Muster-Plättchen mit den oben genannten Abmessungen verarbeitet.

Es wurden Konzentrationsreihen unter Zusatz von 1,0 Gew.-%, 0,5 Gew.-%, 0,2 Gew.%, 0,1 Gew.-% 0,05 Gew.%, 0,02 Gew.%, 0,01 Gew.%, 0,005 Gew.% und 0 Gew.-% sphärischer Aluminiumpartikel in Polypropylen gefertigt und die jeweils erhaltenen Plättchen mit einem Nd:YAG-Laser (Wellenlänge: 1064 nm; Leistung: 8 W, Impulsfrequenz: 5 KHz; Schreibgeschwindigkeiten: 50 - 250 mm/s) beschriftet. Die Angaben in Gew.-% beziehen sich dabei auf das Gesamtgewicht von Aluminiumpartikeln und PP.

PP-Platten ohne einen Gehalt an sphärischen Aluminiumpartikeln waren nicht mit dem Nd:YAG-Laser markierbar.

Bei Verwendung der sphärischen Aluminiumpartikel ab einer Menge von 0,005 Gew.-% zu PP konnten kontrastreiche, dunkle und abriebfeste Markierungen erhalten werden, die eine exzellente Randschärfe und Punktgenauigkeit aufwiesen. Die PP-Platten blieben dabei transparent und farbneutral.

Bei einem Gehalt an sphärischen Aluminiumpartikeln in einem Bereich von 0,05-0,5 Gew.-% wurde zunehmend eine gräuliche Einfärbung festgestellt, die mit einem Verlust an Transparenz einherging. PP-Platten mit einem Gehalt an sphärischen Aluminiumpartikeln von mehr als 0,5 Gew-% waren grau-opak.

Es konnten keinerlei störenden Grobpartikel oder Flitter beobachtet werden. Zudem waren hierbei bereits in niedrigen Konzentrationsbereichen (0,005-0,02 Gew.-%) mit höheren Schreibgeschwindigkeiten (150-200 mm/s, 8 W, Impulsfrequenz: 5 KHz.) des Lasers exzellente Punktgenauigkeiten und hohe Kontraste gewährleistet. Es konnten keine Fließlinien oder Schlieren in den PP-Platten, die die sphärischen Aluminiumpartikel enthielten, beobachtet werden.

### Erfindungsgemäßes Beispiel 2:

Sphärische Aluminiumpartikel (Fa. ECKART) mit einem D₅₀-Wert von 2,50 µm, einem D₉₀-Wert von 5,46 µm und einem D₉₉-Wert von 11,6 µm (bestimmt mit dem Helos-Gerät wie in Beispiel 1) wurden in Entsprechung zu Beispiel 1 mit PP verarbeitet.

Die erhaltenen Ergebnisse entsprachen den in Beispiel 1 beschriebenen.

### Erfindungsgemäßes Beispiel 3:

Sphärische Aluminiumpartikel (Fa. ECKART) mit einem D₅₀-Wert von 2,27 µm, einem D₉₀-Wert von 3,83 µm und einem D₉₉-Wert von 5,28 µm (bestimmt mit dem Helos-Gerät wie in Beispiel 1) wurden in Entsprechung zu Beispiel 1 mit PP verarbeitet.

Die erhaltenen Ergebnisse entsprachen den in Beispiel 1 beschriebenen.

### Erfindungsgemäßes Beispiel 4:

Sphärische Aluminiumpartikel (Fa. ECKART) mit einem D₅₀-Wert von 17,5 µm, einem D₉₀-Wert von 34,5 µm und einem D₉₉-Wert von 62,0 µm (bestimmt mit dem Helos-Gerät wie in Beispiel 1) wurden in Entsprechung zu Beispiel 1 mit PP verarbeitet.

Ab Zusätzen von 0,005 Gew.-% sphärischer Aluminiumpartikel in PP konnten kontrastreiche, dunkle und abriebfeste Markierungen erhalten werden, die eine sehr gute Randschärfe und Punktgenauigkeit aufwiesen. Die PP-Platten blieben dabei transparent und farbneutral. Bei Mengen in einem Bereich von 0,1-1,0 Gew.-% sphärischer Aluminiumpartikel wurde zunehmend eine gräuliche Einfärbung festgestellt, die mit einem Verlust an Transparenz einherging. PP-Platten mit einem Gehalt an sphärischen Aluminiumpartikeln von mehr als 1,0 Gew-% waren grau-opak.
Die Ausbildung glitzernder Flitter wurde hier nur geringen Anteilen beobachtet. Es konnten keine Fließlinien oder Schlieren in den PP-Platten, die die sphärischen Aluminiumpartikel enthielten, beobachtet werden.

### Erfindungsgemäßes Beispiel 5:

Sphärische Aluminiumpartikel (Fa. ECKART) mit einem D₅₀-Wert von 39,3 µm, einem D₉₀-Wert von 69,1 µm und einem D₉₉-Wert von 104 µm (bestimmt mit dem Helos-Gerät wie in Beispiel 1) wurden in Entsprechung zu Beispiel 1 mit PP verarbeitet.

Bei Mengen in einem Bereich von 0,005-0,1 Gew.-% sphärischer Aluminiumpartikel in PP konnten kontrastreiche, dunkle und abriebfeste Markierungen erhalten werden, die eine gute Randschärfe und Punktgenauigkeit aufwiesen. Die PP-Platten blieben dabei transparent und farbneutral. Bei Mengen in einem Bereich von 0,1-1,0 Gew.-% sphärischer Aluminiumpartikel wurde zunehmend eine gräuliche Einfärbung festgestellt, die mit einem Verlust an Transparenz einherging. PP-Platten mit einem Gehalt an sphärischen Aluminiumpartikeln von mehr als 1,0 Gew-% waren grau-opak.
Über den gesamten Konzentrationsbereich konnten teilweise Partikel und die Ausbildung glitzernder Flitter beobachtet werden.
Es konnten keine Fließlinien oder Schlieren in den PP-Platten, die die sphärischen Aluminiumpartikel enthielten, beobachtet werden.

### Vergleichsbeispiel 6:

Sphärische Aluminiumpartikel (Fa. ECKART) mit einem D₅₀-Wert von 140 µm und einem D₉₀-Wert von 230 µm (D₉₉-Wert: nicht bestimmbar) (bestimmt mit dem Helos-Gerät wie in Beispiel 1) wurden in Entsprechung zu Beispiel 1 mit PP verarbeitet. Bei Mengen ab einem Bereich von 0,05 Gew.-% sphärischer Aluminiumpartikel in PP konnten kontrastreiche, dunkle und abriebfeste Markierungen erhalten werden, die eine sehr geringe Randschärfe und Punktgenauigkeit aufwiesen und somit ungenügend waren. Die PP-Platten blieben dabei transparent und farbneutral. Bei Mengen in einem Bereich von 0,2-2,0 Gew.-% sphärischer Aluminiumpartikel wurde zunehmend eine gräuliche Einfärbung festgestellt, die mit einem Verlust an Transparenz einherging. PP-Platten mit einem Gehalt an sphärischen Aluminiumpartikeln von mehr als 2,0 Gew-% waren grau-opak. Über den gesamten Konzentrationsbereich konnten signifikante Anteile an Grobpartikeln und eine signifikante Ausbildung glitzernder Flitter beobachtet werden.
Es konnten keine Fließlinien oder Schlieren in den PP-Platten, die die sphärischen Aluminiumpartikel enthielten, beobachtet werden.

### Vergleichsbeispiel 7:

Feine, plättchenförmige Aluminiumeffektpigmente (PC 200, Fa. Eckart GmbH & Co KG, Fürth, Deutschland) mit einem D₁₀-Wert von 1,51 µm, D₅₀-Wert von 4,02 µm und einem D₉₀-Wert von 10,0 µm (bestimmt mit dem Helos-Gerät wie in Beispiel 1) wurden mit PP in Entsprechung zu Beispiel 1 verarbeitet.

Bei Mengen an sphärischen Aluminiumpartikeln von ≥0,005 Gew.-% ließen sich Markierungen erhalten. Dabei wiesen die PP-Platten bereits bei diesem Gehalt an Aluminiumeffektpigmenten eine Grautrübung auf. Bei einer Menge von 0,01 Gew.-% Aluminiumeffektpigmente war die Grautrübung vergleichbar mit der in Beispiel 1 bei einem Gehalt an sphärischen Aluminiumpartikeln von ≥0,1 % Gew.-% erhaltenen Grautrübung. Bereits bei einem Pigmentgehalt von 0,02 Gew.-% Aluminiumeffektpigmente waren die Platten grau-opak.

Die Markierungen waren kontrastreich, dunkel und abriebfest, zeigte jedoch im Vergleich zu Beispiel 1 eine verminderte Punktgenauigkeit. Es waren die bei Verwendung von plättchenförmigen Pigmenten in der Kunststoffmasse durch Spritzgießen erhaltenen Produkte typische Fließlinien bzw. Schlieren zu beobachten.

### Vergleichsbeispiel 8:

Antimon-dotierte Zinnoxid-Partikel (Mark-it^{™}-Pigmente, Fa. Engelhard Corporation, USA) wurden mit PP in Entsprechung zu Beispiel 1 verarbeitet.

Die erhaltenen PP-Platten zeigten vergleichbare Eigenschaften zu den in Beispiel 1 und 2 hergestellten PP-Platten, jedoch mit geringfügig herabgesetzten Punktgenauigkeiten. Anstelle der in den Beispielen 1, 2 und 3 erhaltenen Graufärbung trat hier bei einem Pigmentgehalt von ≥ 0,1 % Gew.-% eine bräunliche Färbung auf. Die Bildung von Fließlinien oder Schlieren konnte nicht beobachtet werden. Die verwendeten Mark-it^{™}-Pigmente enthalten jedoch hoch-toxisches Antimon.

### Vergleichsbeispiel 9:

Glimmerplättchen mit Antimon-dotierter Zinnoxid-Beschichtung (Lazerflair^{®} 825, Fa. E. Merck KGaA, Deutschland) wurden mit PP in Entsprechung zu Beispiel 1 verarbeitet.

Die PP-Platten zeigten vergleichbare Eigenschaften zu den in Beispiel 1 und 2 erhaltenen PP-Platten. Jedoch waren hier über alle Konzentrationsbereiche zwar gute, aber im Vergleich zu Beispiel 1,2,3 und 8 waren verminderten Punktgenauigkeiten zu beobachten, eine erste Trübung trat bei Konzentrationen von ≥ 0,1% Gew.-% ein und das Medium wurde bei Konzentrationen von ≥2,0 Gew.-% opak.
Anstelle einer bei einem Aluminiumpartikelgehalt von ≥0,1% Gew.-% in den Beispielen 1 und 2 erhaltenen Graufärbung trat in analoger Weise bei den Lazerflair^{®} 825-Pigmenten eine grünliche Einfärbung auf. In den spritzgegossenen Platten waren die beim Spritzgießen von plättchenförmigen Effektpigment-haltigen Kunststoffmassen typischen Fließlinien bzw. Schlieren zu beobachten. Das Pigment Lazeflair^{®} 825 enthält ebenfalls toxisches Antimon.

### Erfindungsgemäßes Beispiel 10:

Ein Pulver aus sphärischen Aluminiumpartikeln (Fa. ECKART) mit einem D₅₀-Wert von 1,57 µm, einem D₉₀-Wert von 3,37 µm und einem D₉₉-Wert von 7,55 µm (bestimmt mit dem Helos-Gerät wie in Beispiel 1) wurden in Mischung mit thermoplastischem Polystyrol (PS) (Styron 678-E, Fa. DOW, USA) mittels Spritzgießverfahren zu Platten (Fläche 42 × 60 mm, Dicke 2 mm) in Entsprechung zu Beispiel 1 verarbeitet.

PS-Platten ohne einen Gehalt an sphärischen Aluminiumpartikeln waren nur schwer markierbar. Bei Verwendung von sphärischen Aluminiumpartikeln konnten bei einem Gehalt von 0,005 Gew.-% sphärischer Aluminiumpartikel mittels Laser Markierungen erhalten werden. Bei einem Gehalt ab 0,02 Gew.% sphärischer Aluminiumpartikel konnten kontrastreiche, dunkle und abriebfeste Markierungen erhalten werden, die eine befriedigende Randschärfe und Punktgenauigkeit aufwiesen. Die PS-Platten blieben dabei transparent und farbneutral. Bei Mengen in einem Bereich von 0,05-0,5 Gew.% sphärischer Aluminiumpartikel wurde zunehmend eine gräuliche Einfärbung der PS-Platten festgestellt, die mit einem Verlust an Transparenz einherging. PS-Platten mit einem Gehalt ab 0,5 Gew.-% sphärischer Aluminiumpartikel waren grau-opak. Es konnten keine Fließlinien oder Schlieren beobachtet werden.

### Erfindungsgemäßes Beispiel 11:

Ein Pulver aus sphärischen Aluminiumpartikeln (Fa. ECKART) mit einem D₅₀-Wert von 1,57 µm, einem D₉₀-Werr von 3,37 µm und einem D₉₉-Wert von 7,55 µm (bestimmt mit dem Helos-Gerät wie in Beispiel 1) wurden in Mischung mit thermoplastischen Polycarbonat (PC) (Calibre 201 TNT; Fa. DOW, USA) im Spritzgießverfahren zu Platten (Fläche 42 × 60 mm, Dicke 2 mm) in Entsprechung zu Beispiel 1 verarbeitet.

PC-Platten ohne einen Gehalt an sphärischen Aluminiumpartikeln waren nur schwer markierbar. Ab Mengen von 0,005 Gew.-% sphärischer Aluminiumpartikel wurden kontrastreiche, dunkle und abriebfeste Markierungen erhalten. Die Ergebnisse in den weiteren Mengenbereichen entsprachen den in Beispiel 1 erhaltenen Ergebnissen.

### Erfindungsgemäßes Beispiel 12:

Ein Pulver aus sphärischen Aluminiumpartikeln (Fa. ECKART) mit einem D₅₀-Wert von 1,57 µm, einem D₉₀-Wert von 3,37 µm und einem D₉₉-Wert von 7,55 µm (bestimmt mit dem Helos-Gerät wie in Beispiel 1) wurden in Mischung mit thermoplastischen Polyethylentherephthalat (PET) (Suka 5141, Fa. Du Pont, USA) im Spritzgießverfahren zu Platten (Fläche 42 × 60 mm, Dicke 2 mm) in Entsprechung zu Beispiel 1 verarbeitet.

PET-Platten ohne einen Gehalt an sphärischen Aluminiumpartikeln waren nur schwer markierbar. Bei Mengen von 0,005 Gew.-% sphärischer Aluminiumpartikel waren die PET-Platten markierbar. Ab Mengen von 0,005 Gew.-% wurden kontrastreiche, dunkle und abriebfeste Markierungen erhalten. Die Ergebnisse in den weiteren Mengenbereichen entsprachen den in Beispiel 1 erhaltenen Ergebnissen, bei guten, aber verminderten Punktgenauigkeiten.

### Erfindungsgemäßes Beispiel 13

Ein Pulver aus sphärischen Aluminiumpartikeln (Fa. ECKART) mit einem D₅₀-Wert von 1,57 µm, einem D₉₀-Wert von 3,37 µm und einem D₉₉-Wert von 7,55 µm (bestimmt mit dem Helos-Gerät wie in Beispiel 1) wurden in Mischung mit thermoplastischen Styrol-Acrylnitril (SAN) (Tyril 867 E; Fa. DOW, USA) im Spritzgießverfahren in Entsprechung zu Beispiel 1 zu Platten (Fläche 42 × 60 mm, Dicke 2 mm) verarbeitet.

SAN-Platten ohne einen Gehalt an sphärischen Aluminiumpartikeln waren nur schwer markierbar. Bei einem Gehalt von 0,01 Gew.-% sphärischer Aluminiumpartikel waren die SAN-Platten markierbar. Ab einem Gehalt von 0,02 Gew.-% sphärischer Aluminiumpartikel wurden kontrastreiche, dunkle und abriebfeste Markierungen erhalten. Die Ergebnisse in den weiteren Mengenbereichen entsprachen den in Beispiel 1 erhaltenen Ergebnissen bei guten, aber leicht verminderten Punktgenauigkeiten.

### Erfindungsgemäßes Beispiel 14:

Ein Pulver aus sphärischen Aluminiumpartikeln (Fa. ECKART) mit einem D₅₀-Wert von 1,57 µm, einem D₉₀-Wert von 3,37 µm und einem D₉₉-Wert von 7,55 µm (bestimmt mit dem Helos-Gerät wie in Beispiel 1) wurden in Mischung mit thermoplastischen Acryl-Butadien-Styrol-Copolymer (ABS) (Magnum 8433, Fa. DOW, USA) im Spritzgießverfahren in Entsprechung zu Beispiel 1 zu Platten (Fläche 42 × 60 mm, Dicke 2 mm) verarbeitet

ABS-Platten ohne einen Gehalt an sphärischen Aluminiumpartikeln waren nur schwer markierbar. Bei einem Gehalt von 0,005 Gew.-% an sphärischen Aluminiumpartikeln wurden kontrastreiche, dunkle und abriebfeste Markierungen in hellem ABS erhalten, die eine exzellente Randschärfe und Punktgenauigkeit aufwiesen. Die Platten blieben dabei farbneutral, da ABS ist als Material selbst nicht transparent ist.

Bei einem Gehalt von sphärischen Aluminiumpartikeln in einem Bereich von 0,05-0,1 Gew.-% wurde zunehmend eine gräuliche Einfärbung beobachtet. Die ABS-Platten mit einem Gehalt von 0,2% Gew.-% sphärischer Aluminiumpartikel waren grau. Es wurden keine Fließlinien oder Schlieren beobachtet.

### Erfindungsgemäßes Beispiel 15:

Ein Pulver aus sphärischen Aluminiumpartikeln (Fa. ECKART) mit einem D₅₀-Wert von 1,57 µm, einem D₉₀-Wert von 3,37 µm und einem D₉₉-Wert von 7;55 µm (bestimmt mit dem Helos-Gerät wie in Beispiel 1) wurden in Mischung mit Polyethylen niedriger Dichte (LDPE) (LDPE 410-E, Fa. DOW, USA) zu Blasfolien mit einer Dicke von 100 µm mittels Folienextruder Scientific (Fa. LabTech, Thailand) verarbeitet.

Es wurde eine Konzentrationsreihe unter Zusatz von 2,0 Gew.-%, 1,0 Gew.-%, 0,5 Gew.-%, 0,2 Gew.-%, 0,1 Gew.-%, 0,05 Gew.-% und 0,02 Gew.-% gefertigt.

Die LDPE-Folien waren ohne einen Gehalt an sphärischen Aluminiumpartikeln nicht markierbar. In einem Bereich von 0,02-0,5 Gew.-% sphärischer Aluminiumpartikel wurden bei Laserbehandlung kontrastreiche, dunkle und abriebfeste Markierungen auf transparenten und farbreinen Folien erhalten werden. Eine exzellente Punktgenauigkeit und Abbildungsschärfe war zu beobachten. Bei einem Gehalt von ≥0,5 Gew.-% sphärischer Aluminiumpartikel wurde eine zunehmende Graufärbung der Folien beobachtet.

### Erfindungsgemäßes Beispiel 16:

Ein Pulver aus sphärischen Aluminiumpartikeln (Fa. ECKART) mit einem D₅₀-Wert von 1,57 µm, einem D₉₀-Wert von 3,37 µm und einem D₉₉-Wert von 7,55 µm (bestimmt mit dem Helos-Gerät wie in Beispiel 1) wurden in Mischung mit thermoplastischem Polyamid PA6 (Gerstamid R 200 S; Fa. Resin Express, Deutschland) im Spritzgießverfahren in Entsprechung zu Beispiel 1 zu Platten (Fläche 42 × 60 mm, Dicke 2 mm) verarbeitet.

PA6-Platten ohne einen Gehalt an sphärischen Aluminiumpartikeln waren nicht markierbar. Die Ergebnisse in den weiteren Mengenbereichen entsprachen den in Beispiel 14 erhaltenen Ergebnissen.

In der nachfolgenden Tabelle sind die Beispiele und ihre Ergebnisse nochmals zusammengestellt.

**Tabelle 1: Zusammenstellung der Ergebnisse der Beispiele**

| Beispiel | Additiv | Polymer | Marklerbarkeit des Polymers ohne Zusatz | Konzentrationen für kontrastreiche Markierung [Gew.-%] | Konzentrationen bei denen Trübung auftritt [Gew.%] | Konzentrationen bei denen Einfärbung auftritt [Gew.%] | Konzentrationen mit Verlust von Transparenz (opakes Medium) [Gew.%] | Punktgenauigkeit | Auftreten von sichtbaren Partikeln (z.B. Grobpartikel oder Flitter) |
|---|---|---|---|---|---|---|---|---|---|
| 1 | Al-Pulver | PP | nicht markierbar | ≥ 0,005 | ≥ 0,05 | ≥ 0,1 (gräulich) | ≥ 0,5 | exzellent | nein |
| | (sphärisch) | | | | | | | | |
| 2 | Al-Pulver | PP | nicht markierbar | ≥ 0,005 | ≥ 0,05 | ≥ 0,1 (gräulich) | ≥ 0,5 | exzellent | nein |
| | (sphärisch) | | | | | | | | |
| 3 | Al-Pulver | PP | nicht markierbar | ≥ 0,005 | ≥ 0,05 | ≥ 0,1 (gräulich) | ≥ 0,5 | exzellent | nein |
| | (sphärisch) | | | | | | | | |
| 4 | Al-Pulver | PP | nicht markierbar | ≥ 0,005 | ≥ 0,1 | ≥ 0,2 (gräulich) | ≥ 1,0 | sehr gut | minimal |
| | (sphärisch) | | | | | | | | |
| 5 | Al-Pulver | PP | nicht markierbar | ≥ 0,005 | ≥ 0,1 | ≥ 0,2 (gräulich) | ≥ 1,0 | gut | ja |
| | (sphärisch) | | | | | | | | |
| 6 | Al-Pulver | PP | nicht markierbar | ≥ 0,05 | ≥ 0,2 | ≥ 0,5 (gräulich) | 2 2,0 | ungenügend | signifikant |
| (Vergleich) | | | (sphärisch) | | | | | | |
| 7 | Al-Pigment | PP | nicht markierbar | ≥ 0,005 | ≥ 0,005 | ≥ 0,01 (gräulich) | ≥ 0,02 | gut | nein |
| (Vergleich) | (plättchenförmig) | | | | | | | | |
| 8 | Mark-it^{™} | PP | nicht markierbar | ≥ 0,005 | ≥ 0,05 | ≥ 0,1 (bräunlich) | ≥ 0,5 | exzellent | nein |
| (Vergleich) | (Antimon-dotierte Zinnoxid-Partikel) | | | | | | | | |
| 9 | Lazetflair^{®} 825 | PP | nicht markierbar | ≥ 0,005 | ≥ 0,1 | ≥ 0,1 (grünlich) | ≥ 2,0 | gut | nein |
| (Vergleich) | (Glimmerplättchen mit Antimon-dotierter Zinnoxid-Beschichtung) | | | | | | | | |
| 10 | Al-Pulver | PS | schwer | ≥ 0,02 | ≥ 0,05 | ≥ 0,1 (gräulich) | ≥ 0,5 | befriedigend | nein |
| | (sphärisch) | | markierbar | | | | | | |
| 11 | Al-Pulver | PC | schwer | ≥ 0,005 | ≥ 0,05 | ≥ 0,1 (gräulich) | ≥ 0,5 | exzellent | nein |
| | (sphärisch) | | markierbar | | | | | | |
| 12 | Al-Pulver | PET | schwer | ≥ 0,005 | ≥ 0,05 | ≥ 0,1 (gräulich) | ≥ 0,5 | gut | nein |
| | (sphärisch) | | markierbar | | | | | | |
| 13 | Al-Pulver | SAN | schwer | ≥ 0,02 | ≥ 0,05 | ≥ 0,1 (gräulich) | ≥ 0,5 | gut | nein |
| | (sphärisch) | | markierbar | | | | | | |
| 14 | Al-Pulver | ABS | schwer | ≥ 0,005 | ≥ 0,05 | ≥ 0,1 (gräulich) | ABS ist nicht transparent | exzellent | nein |
| | (sphärisch) | | markierbar | | | | | | |
| 15 | Al-Pulver | LDPE | nicht markierbar | ≥ 0,02 | ≥ 0,05 | ≥ 0,05 (gräulich) | ≥ 0,05 | sehr gut | nein |
| | (sphärisch) | | | | | | | | |
| 16 | Al-Pulver | PA6 | nicht markierbar | ≥ 0,005 | ≥ 0,05 | ≥ 0,1 (gräulich) | PA 6 ist nicht transparent | exzellent | nein |
| | (sphärisch) | | | | | | | | |

Wie aus der zusammenfassenden Tabelle 1 ersichtlich ist, ermöglicht die vorliegende Erfindung die Bereitstellung von lasermarkierbaren Kunststoffen, die transparent und zu gleich mit sehr gutem Kontrast und hoher Abbildungsschärfe mit einem Laser markierbar sind.

Eine sehr gute kontrastreiche Markierung ist in der Regel ab einem Gehalt von sphärischen Aluminiumpartikeln von 0,005 Gew.-%, bezogen auf das Gesamtgewicht der Kunststoffmasse, erhältlich. Eine Graufärbung oder Trübung erfolgt in der Regel ab einem Gehalt von sphärischen Aluminiumpartikeln von 0,05 Gew.-%.

Aus dem Vergleichsbeispiel 7 ist ersichtlich, dass bei Verwendung von Aluminiumeffektpigmenten mit vergleichbarer Partikelgröße eine Trübung oder Graufärbung dann auftritt, wenn der Kunststoff auch lasermarkierbar wird. Der Grenzwert liegt hier jeweils bei 0,005 Gew.-%.

Aus dem Vergleich mit den Vergleichsbeispielen 5 und 6 ist ersichtlich, dass die vorliegende Erfindung die Bereitstellung von lasermarkierbaren Kunststoffen ohne Verwendung von hochtoxischen Antimon-haltigen Verbindungen oder Partikeln ermöglicht.

Aus den nachfolgenden-Vergleichsbeispielen 17 und 18 sowie dem erfindungsgemäßen Beispiel 19 geht hervor, dass es bei Verwendung von Perlglanzpigmenten als Lasermarkierungsmittel zur Sichtbarmachung bzw. zum Auftreten von Fließlinien kommt.

### Vergleichsbeispiel 17: (in Anlehnung an die EP 1 145 864 A1)

Analog zu Beispiel 1 wurde in Polypropylen (PP) ein silbernes Perlglanzpigment (PX1001, Fa. ECKART) in einer Konzentration von 0,49 Gew.-% verarbeitet. Hierbei sind konnten kontrastreiche, dunkle und abriebfeste Markierungen erhalten werden, die eine befriedigende bis ausreichende Randschärfe und Punktgenauigkeit aufwiesen. Die PP-Platten waren dabei jedoch perlglänzend-hell und opak. Die Ausbildung von Fließlinien in den PP-Platten waren sehr deutlich zu beobachteten.

### Vergleichsbeispiel 18: (in Anlehnung an die EP 1 145 864 A1)

Analog zu Beispiel 1 wurde in Polypropylen (PP) ein silbernes Perlglanzpigment (PX1001, Fa. ECKART) in einer Konzentration von 0,49 Gew.-% und Zink-Pulver, welches eine Korngrößenverteilung: D₁₀: 1,9 µm; D₅₀: 3,4 µm; D₉₀: 6 µm aufwies (Zink-Staub 17640, Hersteller: Fa. Norzinko GmbH, Goßlar, Deutschland) in 0,0098 Gew.-% mit PP verarbeitet.

Die Ergebnisse entsprachen exakt den unter Vergleichsbeispiel 17 genannten.

### Beispiel 19:

Analog zu Beispiel 1 wurde Zink-Pulver (Zink-Staub 17640, Fa. Norzinko GmbH, Goßlar, Deutschland) mit Polypropylen (PP) verarbeitet.
Bei Verwendung des Zink-Pulvers ab einer Menge von 0,005% zu PP konnten kontrastreiche, dunkle und abriebfeste Markierungen erhalten werden, die eine befriedigende Randschärfe und Punktgenauigkeit aufwiesen. Ab Zusätzen von 0,05 Gew.-% wurden sehr gute Punktgenauigkeiten und Randschärfen erhalten.
Die PP-Platten blieben dabei transparent und farbneutral.

Ab einem Gehalt an Zink-Pulver von 0,05 Gew.-% wurde zunehmend eine gräuliche Einfärbung festgestellt, die mit einem Verlust an Transparenz einherging. PP-Platten mit einem Gehalt an Zink-Pulver von mehr als 1,0 Gew-% waren grau-opak.
Allerdings ließen sich nur gute Markierungen bei geringeren
Schreibgeschwindigkeiten des Nd:YAG-Lasers (50 mm/s, 8 W, Impulsfrequenz: 5 KHz.) mit einer sehr guten Punktgenauigkeit und hohem Kontrast erreichen.
Es konnten keine Fließlinien oder Schlieren in den PP-Platten, die die sphärischen Aluminiumpartikel enthielten, beobachtet werden.

### Beispiel 20:

Analog zu Beispiel 1 wurde in Polypropylen (PP) ein silbernes Perlglanzpigment (PX1001, Fa. ECKART) in einer Konzentration von 0,05 Gew.-% und Zink-Pulver (Zink-Staub 17640, Fa. Norzinko GmbH, Goßlar, Deutschland) in einer Konzentration von 0,25 Gew.-% und 0,05 Gew. mit PP verarbeitet.
Die Ergebnisse waren vergleichbar mit den in Beispiel.19 angeführten, jedoch waren hierbei etwas verminderte Punktgenauigkeiten zu beobachten. Die Platten blieben in den genannten Konzentrationen transparent, es war jedoch bereits die Ausbildung von Fließlinien zu beobachteten.

Die Ergebnisse der Beispiele 19 und 20 zeigen gegenüber jenen der Vergleichsbeispiele 17 und 18 deutlich die Vorteile bei Verwendung von Metallpartikeln ohne oder mit nur geringen Mengen an Perlglanzpigmenten auf. Den Ergebnissen der beiden Vergleichsbeispiele 17 und 18 kann kein Vorteil durch Verwendung von Zinkpulver entnommen werden.
Ein Vergleich der beiden Beispiele 19 und 20 zeigt, dass Fließlinien auch schon bei geringen Mengen an Perlglanzpigmenten auftreten können.

In den nachstehenden Beispielen 21 bis 24 wird die besondere Eignung von Metallpartikeln als Laserschweißbarkeitsmittel aufgezeigt.

### Beispiel 21:

Ein Pulver aus sphärischen Aluminiumpartikeln mit einem D₅₀-Wert von 1,57 µm, einem D₉₀-Wert von 3,37 µm und einem D₉₉-Wert von 7,55 µm (bestimmt mit dem Helos-Gerät wie in Beispiel 1) wurde in einer 0,05 Gew.-%i-gen Mischung mit thermoplastischem Polypropylen (R 771 - 10; Fa. DOW, USA) im Spritzgussverfahren zu Platten (analog zu Beispiel 1, Fläche 42 × 60 mm, Dicke 1 mm) verarbeitet.

Eine so erhaltene Platte wurde mit einer entsprechend unpigmentierten Platte aus thermoplatischen Polypropylen (R 771 - 10; Fa. DOW, USA) bedeckt und mittels eines Nd:YAG-Lasers (1064 nm; 8 W, Impulsfrequenz 5 KHz; Schreibgeschwindigkeit 50 mm/s) eine Fläche 10 × 10 mm bestrahlt. Dadurch konnte ein Verschmelzen der Platten an deren Kontaktfläche im bestrahlten Bereich herbeigeführt werden. Die Verschweißung konnte nur unter Kraftaufwendung wieder getrennt werden.

### Vergleichsbeispiel 22:

Analog Beispiel 20 wurden mit zwei unpigmentierten Platten aus thermoplastischen Polypropylen (R 771 - 10; Fa. DOW, USA) verfahren. Dadurch konnte keine Verschmelzung der Kunststoffplatten herbeigeführt werden.

### Beispiel 23:

Ein Pulver aus sphärischen Aluminiumpartikeln mit einem D₅₀-Wert von 1,57 µm, einem D₉₀-Wert von 3,37 µm und einem D₉₉-Wert von 7,55 µm (bestimmt mit dem Helos-Gerät wie in Beispiel 1) wurden in einer 0,5% Gew.-%igen Mischung mit Polyethylen niedriger Dichte (LDPE) (LDPE 410-E, Fa. DOW, USA) zu Blasfolien mit einer Dicke von 100 µm mittels einem Folienextruder Typ: Scientific, Fa LabTech, Thailand) verarbeitet. Ein Folienstück (110 × 70 mm) wurde mit entsprechend unpigmentierter LDPE-Folie bedeckt und analog zu Beispiel 20 behandelt. Dadurch konnte ein Verschmelzen der Folien an deren Kontaktfläche im bestrahlten Bereich herbeigeführt werden. Die Verschweißung konnte nur unter Kraftaufwendung und unter Zerstörung der Folien am Ort der Verschmelzung wieder getrennt werden.

### Vergleichsbeispiel 24:

Analog Beispiel 22 wurden mit zwei unpigmentierten Folien aus Polyethylen niedriger Dichte (LDPE) (LDPE 410-E, Fa. DOW, USA) verfahren. Dadurch konnte keine Verschmelzung der Kunststofffolien herbeigeführt werden.

## Patentansprüche

1. Verwendung von sphärischen Metallpartikeln, die frei von Antimon und/oder Antimon-haltigen Verbindungen sind, als Lasermarkierungs- oder Laserschweißbarkeitsmittel in einem Kunststoff, wobei die mittels Lasergranulometrie bestimmte Korngrößenverteilung der sphärischen Metallpartikel, in der Form der Volumen-gemittelten Summendurchgangskorngrößenverteilung, einen D₉₉-Wert von < 110 µm, einen D₉₀-Wert von < 75 µm und einen D₅₀ < 45 µm aufweisen.

2. Verwendung von sphärischen Metallpartikeln als Lasermarkierungs- oder Laserschweißbarkeitsmittel nach Anspruch 1,
**dadurch gekennzeichnet,**
**dass** die Summendurchgangskorngrößenverteilung der sphärischen Metallpartikel einen D₉₉-Wert von < 70 µm und einen D₉₀-Wert von < 40 µm aufweisen.

3. Verwendung von sphärischen Metallpartikeln als Lasermarkierungs- oder Laserschweißbarkeitsmittel nach Anspruch 1 oder 2,
**dadurch gekennzeichnet,**
**dass** die Summendurchgangskorngrößenverteilung der sphärischen Metallpartikel einen D₉₉-Wert von < 65 µm und einen D₉₀-Wert von < 36 µm aufweisen.

4. Verwendung von sphärischen Metallpartikeln als Lasermarkierungs- oder Laserschweißbarkeitsmittel nach einem der vorhergehenden Ansprüche,
**dadurch gekennzeichnet, dass** die Metallpartikel Metalle enthalten oder aus diesen bestehen, die aus der Gruppe, die aus Aluminium, Kupfer, Silber, Gold, Zink, Zinn, Eisen, Titan, Vanadium, Magnesium und Legierungen davon besteht, ausgewählt wird.

5. Verwendung von sphärischen Metallpartikeln als Lasermarkierungs- oder Laserschweißbarkeitsmittel nach einem der vorhergehenden Ansprüche,
**dadurch gekennzeichnet,**
**dass** die Metallpartikel einen Metalloxidgehalt von nicht mehr als 10 Gew-%, bezogen auf das Gesamtgewicht der Metallpartikel, aufweisen.

6. Verwendung von sphärischen Metallpartikeln als Lasermarkierungs- oder Laserschweißbarkeitsmittel nach einem der vorhergehenden Ansprüche,
**dadurch gekennzeichnet,**
**dass** die Metallpartikel mit wenigstens einer anorganischen Metalloxidschicht versehen sind.

7. Verwendung von sphärischen Metallpartikeln als Lasermarkierungs- oder Laserschweißbarkeitsmittel nach Anspruch 6
**dadurch gekennzeichnet,**
**dass** die Metalloxidschicht SiO₂ enthält oder aus SiO₂ besteht.

8. Masterbatch,
**dadurch gekennzeichnet,**
**dass** der Masterbatch die gemäß den Ansprüchen 1 bis 7 verwendeten sphärischen Metallpigmente und mindestens einen Dispersionsträger enthält.

9. Masterbatch nach Anspruch 8,
**dadurch gekennzeichnet,**
**dass** der Dispersionsträger der Gruppe bestehend aus Kunststoffkomponenten, Wachse; Harze, Additive oder Mischungen hieraus, ausgewählt wird.

10. Masterbatch nach Anspruch 8 oder 9,
**dadurch gekennzeichnet,**
**dass** der Gehalt an sphärischen Metallpartikeln im Masterbatch 80 bis 99 Gew.-%, bezogen auf das Gesamtgewicht des Masterbatches beträgt.

11. Masterbatch nach Anspruch 8,
**dadurch gekennzeichnet,**
**dass** der Gehalt an sphärischen Metallpartikeln im Masterbatch 0,001 bis 5 Gew.-%, bezogen auf das Gesamtgewicht des Masterbatch beträgt.

12. Verwendung eines Masterbatches nach einem der Ansprüche 8 bis 11 zur Herstellung eines lasermarkierbaren und/oder laserschweißbaren Kunststoffs.

13. Lasermarkierbarer und/oder laserschweißbarer Kunststoff,
**dadurch gekennzeichnet,**
**dass** der Kunststoff ein Lasermarkierungsmittel gemäß einem der Ansprüche 1 bis 7 oder ein Masterbatch gemäß einem der Ansprüche. 8 bis 11 enthält.

14. Lasermarkierbarer und/oder laserschweißbarer Kunststoff nach Anspruch 13,
**dadurch gekennzeichnet,**
**dass** der Anteil der Metallpartikel in dem Kunststoff 0,0005 bis 0,8 Gew.-%, vorzugsweise 0,001 bis 0,5 Gew.-%, jeweils bezogen auf das Gesamtgewicht des Kunststoffs beträgt.

15. Lasermarkierbarer und/oder laserschweißbarer Kunststoff nach einem der Ansprüche 13 oder 14,
**dadurch gekennzeichnet,**
**dass** der Anteil der Metallpartikel in dem Kunststoff 0,005 bis 0,5 Gew.%, vorzugsweise 0,01 bis 0,1 Gew.-%, jeweils bezogen auf das Gesamtgewicht des lasermarkierbaren Kunststoffs, beträgt.

16. Lasermarkierbarer und/oder laserschweißbarer Kunststoff nach Anspruch 13 ,
**dadurch gekennzeichnet,**
**dass** der Kunststoff eine Kunststofffolie oder ein Etikett ist.

17. Lasermarkierbarer und/oder laserschweißbarer Kunststoff nach Anspruch 16,
**dadurch gekennzeichnet,**
**dass** der Kunststoff eine Kunststofffolie mit einem Anteil der Metallpartikel von 0,01 bis 1,0 Gew.-%, vorzugsweise 0,02 bis 0,5 Gew.-%, jeweils bezogen auf das Gesamtgewicht der lasermarkierbaren Kunststofffolie ist.

18. Lasermarkierbarer und/oder laserschweißbarer Kunststoff nach einem der Ansprüche 13 bis 15,
**dadurch gekennzeichnet,**
**dass** der Kunststoff ein dreidimensionaler Kunststoffkörper ist.

19. Lasermarkierbarer und/oder laserschweißbarer Kunststoff nach einem der Ansprüche 13 bis 18,
**dadurch gekennzeichnet,**
**dass** der lasermarkierbare und/oder laserschweißbare Kunststoff ein Bestandteil eines Gegenstandes ist, der selbst nicht lasermarkierbar und/oder laserschweißbar sein muss.

20. Lasermarkierbarer Kunststoff nach einem der Ansprüche 13 bis 19,
**dadurch gekennzeichnet,**
**dass** der Kunststoff ein Thermoplast, Duroplast, Elastomer oder Kautschuk umfaßt.

21. Laserschweißbarer Kunststoff nach einem der Ansprüche 13 bis 19,
**dadurch gekennzeichnet,**
**dass** der Kunststoff ein Thermoplast umfaßt.

## Claims

1. Use of spherical metal particles which are free of antimony and/or compounds containing antimony as a laser-marking or laser-weldable means in a plastic, and the grain size distribution of the spherical metal particles determined by laser granulometry in the form of the volume-averaged cumulative intensity profile of the grain size distribution has a D₉₉ value of < 110 µm, a D₉₀ value of < 75 µm and a D₅₀ value of < 45 µm.

2. Use of spherical metal particles as a laser-marking means or laser-weldability means as claimed in claim 1,
**characterised in that**
the cumulative intensity profile of the grain size distribution of the spherical metal particles has a D₉₉ value of < 70 µm, and a D₉₀ value of < 40 µm.

3. Use of spherical metal particles as a laser-marking or laser-weldability means as claimed in claim 1 or 2,
**characterised in that**
the cumulative intensity profile of the grain size distribution of the spherical metal particles has a D₉₉ value of < 65 µm and a D₉₀ value of < 36 µm.

4. Use of spherical metal particles as a laser-marking or laser-weldability means as claimed in one of the preceding claims,
**characterised in that**
the metal particles contain or are made from metals selected from the group comprising aluminium, copper, silver, gold, zinc, tin, iron, titanium, vanadium, magnesium and alloys thereof.

5. Use of spherical particles as a laser-marking or laser-weldability means as claimed in one of the preceding claims,
**characterised in that**
the metal particles have a metal oxide content that is not more than 10 % by weight by reference to the total weight of the metal particles.

6. Use of spherical metal particles as a laser-marking or laser-weldability means as claimed in one of the preceding claims,
**characterised in that**
the metal particles are provided with at least an inorganic metal oxide coating.

7. Use of spherical metal particles as a laser-marking or laser-weldability means as claimed in claim 6,
**characterised in that**
the metal oxide coating contains SiO₂ or consists of SiO₂.

8. Master batch,
**characterised in that**
the master batch contains the spherical metal pigments used in claims 1 to 7 and at least one dispersion substrate.

9. Master batch as claimed in claim 8,
**characterised in that**
the dispersion substrate is selected from the group comprising plastic components, waxes, resins, additives or mixtures thereof.

10. Master batch as claimed in claim 8 or 9,
**characterised in that**
the content of spherical metal particles in the master batch is 80 to 99 % by weight by reference to the total weight of the master batch.

11. Master batch as claimed in claim 8,
**characterised in that**
the content of spherical metal particles in the master batch is 0.001 to 5 % by weight by reference to the total weight of the master batch.

12. Use of a master batch as claimed in one of claims 8 to 11 for producing a laser-markable and/or laser-weldable plastic.

13. Laser-markable and/or laser-weldable plastic,
**characterised in that**
the plastic contains a laser marking means as claimed in one of claims 1 to 7 or a master batch as claimed in one of claims 8 to 11.

14. Laser-markable and/or laser-weldable plastic as claimed in claim 13,
**characterised in that**
the proportion of metal particles in the plastic is 0.0005 to 0.8 % by weight, preferably 0.001 to 0.5 % by weight, by reference to the total weight of the plastic in each case.

15. Laser-markable and/or laser-weldable plastic as claimed in one of claims 13 or 14,
**characterised in that**
the proportion of metal particles in the plastic is 0.005 to 0.5 % by weight, preferably 0.01 to 0.1 % by weight, by reference to the total weight of the laser-markable plastic in each case

16. Laser-markable and/or laser-weldable plastic as claimed in claim 13,
**characterised in that**
the plastic is a plastic film or a label.

17. Laser-markable and/or laser-weldable plastic as claimed in claim 16,
**characterised in that**
the plastic is a plastic film with a proportion of metal particles of from 0.01 to 1.0% by weight, preferably 0.02 to 0.5 % by weight, by reference to the total weight of the laser-markable plastic film in each case.

18. Laser-markable and/or laser-weldable plastic as claimed in one of claims 13 to 15,
**characterised in that**
the plastic is a three-dimensional body.

19. Laser-markable and/or laser-weldable plastic as claimed in one of claims 13 to 18,
**characterised in that**
the laser-markable and/or laser-weldable plastic is part of an object which does not itself have to be laser-markable and/or laser-weldable.

20. Laser-markable plastic as claimed in one of claims 13 to 19,
**characterised in that**
the plastic is a heat-deformable plastic, a thermo-setting plastic, an elastomer or rubber.

21. Laser-weldable plastic as claimed in one of claims 13 to 19,
**characterised in that**
the plastic is a heat-deformable plastic.

## Revendications

1. Utilisation de particules métalliques sphériques qui sont exemptes d'antimoine et/ou de composés antimoniés comme moyens de marquage par laser ou comme moyens de soudabilité par laser dans une matière synthétique, la distribution granulométrique des particules sphériques déterminée par granulométrie au laser, sous la forme de distribution cumulée de la moyenne en volume, présentant une valeur D₉₉ < 110 µm, une valeur D₉₀ < 75 µm et une valeur D₅₀ < 45 µm.

2. Utilisation de particules métalliques sphériques comme moyens de marquage par laser ou comme moyens de soudabilité par laser selon la revendication 1,
**caractérisée en ce que**
la distribution cumulée de la moyenne en volume des particules métalliques sphériques présente une valeur D₉₉ < 70 µm et une valeur D₉₀ < 40 µm.

3. Utilisation de particules métalliques sphériques comme moyens de marquage par laser ou comme moyens de soudabilité par laser selon la revendication 1 ou 2,
**caractérisée en ce que**
la distribution cumulée de la moyenne en volume des particules métalliques sphériques présente une valeur D₉₉ < 65 µm et une valeur D₉₀ < 36 µm.

4. Utilisation de particules métalliques sphériques comme moyens de marquage par laser ou comme moyens de soudabilité par laser selon l'une quelconque des revendications précédentes,
**caractérisée en ce que**
les particules métalliques contiennent des métaux qui sont choisis parmi le groupe qui consiste en l'aluminium, le cuivre, l'argent, l'or, le zinc, l'étain, le fer, le titane, le vanadium, le magnésium ou en des alliages de ceux-ci, ou consistent en ceux-ci.

5. Utilisation de particules métalliques sphériques comme moyens de marquage par laser ou comme moyens de soudabilité par laser selon l'une quelconque des revendications précédentes,
**caractérisée en ce que**
les particules métalliques présentent un taux d'oxyde métallique de pas plus que 10 % en poids, rapporté au poids total de la particule métallique.

6. Utilisation de particules métalliques sphériques comme moyens de marquage par laser ou comme moyens de soudabilité par laser selon l'une quelconque des revendications précédentes,
**caractérisée en ce que**
les particules métalliques sont dotées d'au moins une couche inorganique d'oxyde métallique.

7. Utilisation de particules métalliques sphériques comme moyens de marquage par laser ou comme moyens de soudabilité par laser selon la revendication 6,
**caractérisée en ce que**
la couche d'oxyde métallique contient du SiO₂ ou consiste en SiO₂.

8. Mélange maître
**caractérisé en ce que**
le mélange maître contient les pigments métalliques sphériques utilisés selon les revendications 1 à 7 et au moins un support dispersant.

9. Mélange maître selon la revendication 8
**caractérisé en ce que**
le support dispersant est choisi parmi le groupe consistant en des composants de matière synthétique, des cires, des résines, des additifs ou des mélanges de ceux-ci.

10. Mélange maître selon la revendication 8 ou 9
**caractérisé en ce que**
la teneur en particules métalliques sphériques dans le mélange maître est de 80 à 99 % en poids, rapportés au poids total du mélange maître.

11. Mélange maître selon la revendication 8
**caractérisé en ce que**
la teneur en particules métalliques sphériques dans le mélange maître est de 0,001 à 5 % en poids, rapportés au poids total du mélange maître.

12. Utilisation d'un mélange maître selon l'une quelconque des revendications 8 à 11 à la production d'une matière synthétique marquable par laser et/ou soudable par laser.

13. Matière synthétique marquable par laser et/ou soudable par laser,
**caractérisée en ce que**
la matière synthétique contient un moyen de marquage par laser selon l'une quelconque des revendications 1 à 7 ou un mélange maître selon l'une quelconque des revendications 8 à 11.

14. Matière synthétique marquable par laser et/ou soudable par laser selon la revendication 13,
**caractérisée en ce que**
la proportion des particules métalliques dans la matière synthétique est de 0,0005 à 0,8 % en poids, de préférence de 0,001 à 0,5 % en poids, rapporté chaque fois au poids total de la matière synthétique.

15. Matière synthétique marquable par laser et/ou soudable par laser selon l'une quelconque des revendications 13 ou 14,
**caractérisée en ce que**
la proportion des particules métalliques dans la matière synthétique est de 0,005 à 0,5 % en poids, de préférence de 0,01 à 0,1 % en poids, rapporté chaque fois au poids total de la matière synthétique marquable par laser.

16. Matière synthétique marquable par laser et/ou soudable par laser selon la revendication 13,
**caractérisée en ce que**
la matière synthétique est un film de matière synthétique ou une étiquette.

17. Matière synthétique marquable par laser et/ou soudable par laser selon la revendication 16,
**caractérisée en ce que**
la matière synthétique est un film de matière synthétique avec une proportion de particules métalliques de 0,01 à 1,0 % en poids, de préférence de 0,02 à 0,5 % en poids, rapporté chaque fois au poids total du film de matière synthétique marquable par laser.

18. Matière synthétique marquable par laser et/ou soudable par laser selon l'une quelconque des revendications 13 à 15,
**caractérisée en ce que**
la matière synthétique est un corps de matière synthétique tridimensionnel.

19. Matière synthétique marquable par laser et/ou soudable par laser selon l'une quelconque des revendications 13 à 18,
**caractérisée en ce que**
la matière synthétique marquable par laser et/ou soudable par laser est un élément d'un objet qui ne doit pas nécessairement être lui-même marquable par laser et/ou soudable par laser.

20. Matière synthétique marquable par laser selon l'une quelconque des revendications 13 à 19,
**caractérisée en ce que**
la matière synthétique comprend une matière thermoplastique, une matière thermodurcissable, un élastomère ou un caoutchouc.

21. Matière synthétique soudable par laser selon l'une quelconque des revendications 13 à 19,
**caractérisée en ce que**
la matière synthétique comprend une matière thermoplastique.
